(19) **Europäisches Patentamt / European Patent Office / Office européen des brevets**

(11) **EP 4 258 162 A1**

(12) # EUROPEAN PATENT APPLICATION
published in accordance with Art. 153(4) EPC

(43) Date of publication:
**11.10.2023 Bulletin 2023/41**

(51) International Patent Classification (IPC):
**G06K 9/62** (2022.01)

(21) Application number: **21913399.8**

(22) Date of filing: **27.10.2021**

(86) International application number:
**PCT/CN2021/126581**

(87) International publication number:
**WO 2022/142654 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.12.2020 CN 202011631359**

(71) Applicant: **Huawei Technologies Co., Ltd.**
**Shenzhen, Guangdong 518129 (CN)**

(72) Inventors:
• **TONG, Xialiang**
  **Shenzhen, Guangdong 518129 (CN)**
• **ZHANG, Shen**
  **Shenzhen, Guangdong 518129 (CN)**
• **QIN, Hu**
  **Wuhan, Hubei 430074 (CN)**

(74) Representative: **Pfenning, Meinig & Partner mbB**
**Patent- und Rechtsanwälte**
**Theresienhöhe 11a**
**80339 München (DE)**

(54) **PLACEMENT POSITION ACQUISITION METHOD, MODEL TRAINING METHOD, AND RELATED DEVICES**

(57) This application relates to applying an artificial intelligence method to the warehousing and/or logistics field, and discloses a placement location obtaining method, a model training method, and a related device. The method includes: obtaining first size information of an unoccupied area in accommodation space and second size information of a first object; generating M candidate placement locations based on the first size information and N pieces of second size information, where one candidate placement location indicates one placement location of one determined first object in the unoccupied area; generating a first score value of each candidate placement location based on the first size information by using a first machine learning model; and selecting a first placement location from the M candidate placement locations based on the first score value. This avoids excessive dependence on experience of a technical person, and improves an automation level and efficiency of placing/loading an object in the warehousing and/or logistics field.

FIG. 3

A training device obtains a first training task from a training data set — 301

The training device obtains first size information and N pieces of second size information based on the first training task, where the first size information indicates a size of an unoccupied area in an accommodation space, and the second size information indicates a size of a first object — 302

The training device generates M candidate placement locations based on the first size information and the N pieces of second size information — 303

The training device generates, based on the first size information and the M candidate placement locations by using a first machine learning model, M first score values that are in a one-to-one correspondence with the M candidate placement locations — 304

The training device selects a first placement location from the M candidate placement locations based on the M first score values — 305

The training device trains the first machine learning model based on a first loss function until a convergence condition is met — 306

EP 4 258 162 A1

## Description

This application claims priority to Chinese Patent Application No. 202011631359.0, filed with the China National Intellectual Property Administration on December 30, 2020 and entitled "PLACEMENT LOCATION OBTAINING METHOD, MODEL TRAINING METHOD, AND RELATED DEVICE", which is incorporated herein by reference in its entirety.

## TECHNICAL FIELD

This application relates to the warehousing and/or logistics field, and in particular, to a placement location obtaining method, a model training method, and a related device.

## BACKGROUND

With development of society, there are increasing requirements for aspects such as logistics and warehousing, and how to make reasonable use of placement space or warehousing space becomes a problem to be resolved. At present, a heuristic algorithm is mainly used. The heuristic algorithm is an algorithm designed based on human experience, and obtaining a placement location depends too much on human experience.

As a computer technology develops, artificial intelligence (Artificial Intelligence, AI) has achieved better performance than humans in many problems, and it can automatically generate an optimal placement location. This avoids high-degree manual customization. AI is a computer or a computer-controlled machine that simulates, extends, and expands human intelligence. The artificial intelligence is to research design principles and implementation methods of various intelligent machines, so that the machines have perception, inference, and decision-making functions.

Therefore, a solution that uses the artificial intelligence to resolve a placement problem end-to-end needs to be urgently launched.

## SUMMARY

Embodiments of this application provide a placement location obtaining method, a model training method, and a related device, so that a placement location can be automatically generated by using a first machine learning model. This avoids excessive dependence on experience of a technical person. In addition, size information of accommodation space and size information of each object are fully considered in a process of selecting each placement location. This helps improve utilization of the accommodation space.

To resolve the foregoing technical problem, embodiments of this application provide the following technical solutions:

According to a first aspect, an embodiment of this application provides a placement location obtaining method, so that an artificial intelligence method may be applied to a placement warehousing and/or logistics field, to improve an automation level, placement efficiency, and a placement rate/loading rate of object placement. An execution device obtains first size information and N pieces of second size information, where the first size information indicates a size of an unoccupied area in accommodation space, N is an integer greater than or equal to 1, and the second size information indicates a size of the first object (where one first object includes at least one second object). The execution device may record size information of the first object in a manner of a three-dimensional tensor or a two-dimensional matrix. The execution device generates M candidate placement locations based on the first size information and the N pieces of second size information, where the M candidate placement locations may also be referred to as M candidate placement locations, and M is an integer greater than or equal to 1. One of the M candidate placement locations indicates a placement location of a target object (where the target object may be any one of the N first objects) in the unoccupied area. In other words, each candidate placement location points to a placement location of one of the N first objects in the unoccupied area in the accommodation space. Further, each candidate placement location may be specifically represented as a vector (where the vector may also be referred to as an action vector), the vector may include location information of the target object in the unoccupied area and indication information of the target object, and the indication information of the target object is used to select a determined object from the N first objects. The execution device scores a degree of adaptation between each candidate placement location and the first size information based on the first size information and the M candidate placement locations by using a first machine learning model, to obtain M first score values that are in a one-to-one correspondence with the M candidate placement locations. It should be noted that score values generated by the execution device for different candidate placement locations by using the first machine learning model may be the same. A concept of "one-to-one correspondence" herein is that the execution device generates one first score value for each candidate placement location. In other words, although values of different score values in the M first score values may be the same, the execution device generates one first score value for each candidate placement location. The execution device selects a first placement location from the M candidate placement locations based on the M first score values. A higher first score value corresponding to the first placement location indicates a higher probability that the first placement location is selected. The first placement location indicates that a determined first object (referred to as a third object for ease of differentiation) in the N first objects is placed at a target location in the unoccupied area in the accommodation space.

In this implementation, the placement location may be generated end-to-end by using the first machine learning model. This avoids excessive dependence on experience of a technical person. In addition, a plurality of candidate placement locations are first generated based on size information of the unoccupied area and size information of a plurality of to-be-placed objects. Then, each of the plurality of candidate placement locations is scored based on the size information of the unoccupied area by using the first machine learning model, and one placement location is selected from the plurality of candidate placement locations based on a score value of each candidate placement location. In other words, size information of the accommodation space and size information of each object are fully considered in a process of selecting each placement location. This helps improve utilization of the accommodation space.

In a possible implementation of the first aspect, in an implementation, a training device inputs the M candidate placement locations into a fully connected neural network of a first submodel for M times. In other words, the training device inputs a next candidate placement location into the fully connected neural network of the first sub-model only after generating a score value of a candidate placement location. In another implementation, the training device inputs all the M candidate placement locations into the fully connected neural network of the first submodel at a time, to generate a score value of each of the M candidate placement locations through the fully connected neural network of the first submodel.

In a possible implementation of the first aspect, the first size information is a two-dimensional matrix, a quantity of rows of the two-dimensional matrix indicates a first size of a bottom surface of the accommodation space, and a quantity of columns of the two-dimensional matrix indicates a second size of the bottom surface of the accommodation space. If the first size is a length, the second size is a width. To be specific, if the quantity of rows of the two-dimensional matrix indicates the length of the bottom surface of the accommodation space, the quantity of columns of the two-dimensional matrix indicates the width of the bottom surface of the accommodation space. Alternatively, if the first size is a width, the second size is a length. To be specific, if the quantity of rows of the two-dimensional matrix indicates the width of the bottom surface of the accommodation space, the quantity of columns of the two-dimensional matrix indicates the length of the bottom surface of the accommodation space. The bottom surface of the accommodation space is divided into a plurality of first areas. There is no intersection between different first areas, sizes of different first areas may be the same, and each first area may be specifically represented as a grid. The two-dimensional matrix includes a plurality of matrix values that are in a one-to-one correspondence with the plurality of first areas, and each matrix value indicates remaining space of one of the plurality of first areas in a height direction.

In this embodiment of this application, in comparison with a case in which the first size information is represented in a form of a three-dimensional tensor, the first size information is represented in a form of a two-dimensional matrix, and the first size information in the form of the two-dimensional matrix is input into the first machine learning model, that is, a dimension of the input first size information is reduced. In this way, computing power required in an operation process of the first machine learning model can be greatly reduced, and efficiency of a score value calculation process is improved.

In a possible implementation of the first aspect, the first machine learning model includes a first submodel and a second submodel, and that the execution device generates, based on the first size information and the M candidate placement locations by using a first machine learning model, M first score values that are in a one-to-one correspondence with the M candidate placement locations includes: The execution device inputs the first size information and the M candidate placement locations into the first submodel, to obtain M second score values that are output by the first submodel and that are in a one-to-one correspondence with the M candidate placement locations. It should be noted that second score values generated by the execution device for different candidate placement locations by using the first submodel may be the same. A concept of the foregoing "one-to-one correspondence" is that the execution device generates one second score value for each candidate placement location by using the first submodel. In other words, although values of different score values in the M second score values may be the same, each candidate placement location corresponds to one second score value. The execution device inputs N first volume values that are in a one-to-one correspondence with the N first objects into the second submodel, to obtain N third score values that are output by the second submodel and that are in a one-to-one correspondence with the N first objects. Correspondingly, third score values generated by the execution device for different first objects by using the second submodel may be the same. A concept of the foregoing "one-to-one correspondence" is that the execution device generates one third score value for each first object by using the second submodel. In other words, although values of different score values in the N third score values may be the same, the execution device generates one third score value for each first object. One first object includes at least one second object, and a first volume is any one of the following: an average volume of the at least one second object, a volume of a largest second object in the at least one second object, or a volume of a smallest second object in the at least one second object. The execution device performs a first operation on the M second score values and the N third score values based on the M second score values, the N third score values, and a first correspondence, to generate the M first score values, where the first calculation may be addition, subtraction, or multiplication, and the first correspondence is a correspondence between the M second score values and the N third score values.

In this embodiment of this application, not only each candidate placement location is scored based on the first size information and the M candidate placement locations, but also the N third score values that are in a one-to-one correspondence with the N first objects are generated based on N first volumes corresponding to the N first objects, to obtain a final score value of each candidate placement location based on the N third score values and the M second score values, and score each candidate placement location with reference to more information, to improve accuracy of each generated score value. This helps obtain a most suitable placement position, to improve utilization of the accommodation space. In addition, in a process of selecting a placement location by using the first machine learning model, the N first volume values that are in a one-to-one correspondence with the N first objects are introduced, and the first volume value is related to at least one second object that forms the first object. This helps the first machine learning model learn, based on a volume of the second object, a placement order of obj ects. For example, a large-sized object is first selected, and then a small object is used for filling. In this way, a container can be more fully filled, so that a placement rate/loading rate of the accommodation space can be improved.

In a possible implementation of the first aspect, that the execution device generates the M first score values based on the M second score values, the N third score values, and a first correspondence includes: The execution device obtains, from the N third score values based on the first correspondence, at least one third score value corresponding to a target score value, where the target score value is any score value in the M second score values. The execution device adds each third score value in the at least one third score value corresponding to the target score value to the target score value, to obtain the first score value.

In this embodiment of this application, after the M second score values and the N third score values are obtained, an addition operation is performed on the M second score values and the N third score values based on the first correspondence between the M second score values and the N third score values, to generate a final first score value. This provides a specific implementation solution of generating the first score value. In addition, an addition manner is used to avoid a negative value in the first score value, and avoid an excessively high value in the first score value, so that smoothness of a process of selecting the placement location is improved.

In a possible implementation of the first aspect, the first submodel may be further split into a feature extraction network and a fully connected neural network. The training device inputs the first size information into the feature extraction network of the first submodel, to perform feature extraction on the first size information through the feature extraction network of the first submodel, to obtain first feature information. The first size information may be represented as a three-dimensional tensor or a two-dimensional matrix. The foregoing feature extraction network may be specifically represented as a convolutional neural network or another type of neural network. The first feature information may be specifically represented as a state vector corresponding to the first size information, or may be referred to as a state vector of the unoccupied area in the accommodation space. The training device inputs the first feature information and the M candidate placement locations into the fully connected neural network of the first submodel, to connect the first feature information to each of the M candidate placement locations through the fully connected neural network of the first submodel (that is, pair the first feature information with each candidate placement location), to generate the M second score values. Each candidate placement location may be specifically represented as an action vector. To be specific, the training device connects the state vector (namely, the first feature information) to each of the M action vectors through the fully connected neural network of the first submodel, and generates the M second score values that are in a one-to-one correspondence with M connected state-action vectors, that is, score a degree of adaptation between each action vector (namely, the candidate placement location) and the state vector (namely, the first size information of the unoccupied area).

In this embodiment of this application, feature extraction is performed on the first size information to obtain the first feature information, and the first feature information is connected to each of the M candidate placement locations, to obtain M connection pairs. In this way, the degree of adaptation between the first feature information and each candidate placement location may be scored, that is, the M second score values that are in a one-to-one correspondence with the M candidate placement locations are obtained, so that a specific implementation of generating the second score value is provided, a process of generating the second score value is refined, and a degree of refined management of this solution is improved.

In a possible implementation of the first aspect, the first submodel is any one of the following neural networks: a deep Q neural network, a deep double Q neural network, a competitive deep double Q neural network, or a natural deep Q neural network, and the second submodel is a fully connected neural network. In this embodiment of this application, a plurality of specific implementations of the first submodel are provided, to improve implementation flexibility of this solution.

According to a second aspect, an embodiment of this application provides a model training method, so that an artificial intelligence method is applied to a warehousing and/or logistics field. A training device obtains first size information and N pieces of second size information, where the first size information indicates a size of an unoccupied area in accommodation space, N is an integer greater than or equal to 1, and the second size information indicates a size of a first object. The training device generates M candidate placement locations based on the first size information and the N pieces of second size information, where one of the M candidate placement locations indicates one placement location of a target object in the unoccupied area, the target object is one of the N first objects, and M is an integer greater than or equal to 1. The training device generates, based on the first size information and the M candidate placement locations by using a first machine learning model, M first score values that are in a one-to-one correspondence with the M candidate placement locations. The training device trains the first machine learning model based on a first loss function until a convergence condition is met, where the first loss function indicates a similarity between a maximum value of the M first score values and a fourth score value, and the fourth score value is a score value of one placement location selected from a plurality of candidate placement locations in a previous training process.

In a possible implementation of the second aspect, the training device may alternatively select a first placement location from the M candidate placement locations based on the M first score values. That the training device trains the first machine learning model based on a first loss function includes: The training device trains the first machine learning model based on the first loss function by using a reinforcement learning method. In this case, before calculating the first loss function, the training device further needs to calculate a first reward value, and generate a function value of the first loss function based on the first reward value, a score value of one placement location selected from the plurality of candidate placement locations in the previous training process, and the maximum value of the M first score values generated in step 304. In an implementation, the first reward value includes only a local reward, and the local reward is negatively correlated with a ratio of a volume of a wasted space generated after a determined first object is placed at a determined location in the accommodation space to a total volume of the accommodation space. In another implementation, the first reward value is obtained through calculation based on a local reward and a global reward, and may be obtained through addition, subtraction, multiplication, or the like between the local reward and the global reward. This is not limited herein. A concept of the local reward is the same as that in the previous implementation, and is not described herein. A value of the global reward is negatively correlated with a ratio of a total occupied volume of the accommodation space to a volume of the accommodation space after the training device completes a first training task.

For specific implementations of the steps in the second aspect and the possible implementations of the second aspect in this embodiment of this application, specific meanings of nouns in the possible implementations, and beneficial effects brought by the possible implementations, refer to descriptions in the possible implementations of the first aspect. Details are not described herein one by one again.

According to a third aspect, an embodiment of this application provides a placement location obtaining apparatus, so that an artificial intelligence method is applied to placement in a warehousing and/or logistics field. The placement location obtaining apparatus includes: an obtaining module, configured to obtain first size information and N pieces of second size information, where the first size information indicates a size of an unoccupied area in an accommodation space, N is an integer greater than or equal to 1, and the second size information indicates a size of a first object; a generation module, configured to generate M candidate placement locations based on the first size information and the N pieces of second size information, where one of the M candidate placement locations indicates a placement location of a target object in the unoccupied area, the target object is one object in the N first objects, and M is an integer greater than or equal to 1, where the generation module is further configured to generate, based on the first size information and the M candidate placement locations by using a first machine learning model, M first score values that are in a one-to-one correspondence with the M candidate placement locations; and a selection module, configured to select a first placement location from the M candidate placement locations based on the M first score values.

According to the third aspect in this embodiment of this application, the placement location obtaining apparatus may be further configured to implement the steps performed by the execution device in the possible implementations of the first aspect. For specific implementations of some steps in the third aspect and the possible implementations of the third aspect in this embodiment of this application and beneficial effects brought by each possible implementation, refer to the descriptions in the possible implementations of the first aspect. Details are not described herein again.

According to a fourth aspect, an embodiment of this application provides a model training apparatus, so that an artificial intelligence method is applied to a warehousing and/or logistics field. The model training apparatus includes: an obtaining module, configured to obtain first size information of an unoccupied area in an accommodation space and second size information of N first objects, where N is an integer greater than or equal to 1; a generation module, configured to generate M candidate placement locations based on the first size information and the second size information, where one of the M candidate placement locations indicates a placement location of a target object in the unoccupied area, the target object is one object in the N first objects, and M is an integer greater than or equal to 1, where the generation module is further configured to generate, based on the first size information and the M candidate placement locations by using a first machine learning model, M first score values that are in a one-to-one correspondence with the M candidate placement locations; and a training module, configured to train the first machine learning model based on a first loss function until a convergence condition is met, where the first loss function indicates a similarity between a maximum value of the M first score values and a fourth score value, and the fourth score value is a score value of one placement location selected from a plurality of candidate placement locations in a previous training process.

According to the fourth aspect in this embodiment of this application, the placement location obtaining apparatus may be further configured to implement the steps performed by the training device in the possible implementations of the second aspect. For specific implementations of some steps in the fourth aspect and the possible implementations of the fourth aspect in this embodiment of this application and beneficial effects brought by each possible implementation, refer to the descriptions in the possible implementations of the second aspect. Details are not described herein again.

According to a fifth aspect, an embodiment of this application provides an execution device. The execution device may include a processor, the processor is coupled to a memory, and the memory stores program instructions; and when the program instructions stored in the memory are executed by the processor, the placement location obtaining method according to the first aspect is implemented. For details that the processor performs the steps performed by the execution device in the possible implementations of the first aspect, refer to the first aspect. Details are not described herein again.

In a possible implementation of the fifth aspect, the execution device may further include a mechanical arm, and the mechanical arm is configured to: select one third object from N first objects according to an indication of a first placement location, and place the third object in an unoccupied space. The execution device may be specifically represented as a robot configured with the mechanical arm, or may include only the mechanical arm, and the like. This is not limited herein.

In a possible implementation of the fifth aspect, the execution device may alternatively include an output interface, the output interface is configured to output placement indication information, and the placement indication information indicates a placement location of at least one of the N first objects in an accommodation space. For example, after obtaining a first placement location, the execution device may directly output the first placement location, so that a user can place one determined first object based on the first placement location; or after obtaining placement locations corresponding to a plurality of first objects, the execution device presents an overall placement indication diagram, so that a user can place the plurality of corresponding first objects according to the indication diagram.

According to a sixth aspect, an embodiment of this application provides a training device. The training device may include a processor, the processor is coupled to a memory, and the memory stores program instructions; and when the program instructions stored in the memory are executed by the processor, the model training method according to the second aspect is implemented. For details that the processor performs the steps performed by the training device in the possible implementations of the fourth aspect, refer to the fourth aspect. Details are not described herein again.

According to a seventh aspect, an embodiment of this application provides a computer-readable storage medium. The computer-readable storage medium stores a computer program; and when the computer program is run on a computer, the computer performs the placement location obtaining method according to the first aspect, or the computer performs the model training method according to the second aspect.

According to an eighth aspect, an embodiment of this application provides a circuit system. The circuit system includes a processing circuit, and the processing circuit is configured to perform the placement location obtaining method according to the first aspect, or the processing circuit is configured to perform the model training method according to the second aspect.

According to a ninth aspect, an embodiment of this application provides a computer program product. The computer program product includes instructions; and when the instructions are loaded and executed by an electronic device, the electronic device performs the placement location obtaining method according to the first aspect, or the electronic device performs the model training method according to the second aspect.

According to a tenth aspect, this application provides a chip system. The chip system includes a processor, configured to support a training device or an execution device in implementing functions in the foregoing aspects, for example, sending or processing data and/or information in the foregoing methods. In a possible design, the chip system further includes a memory, and the memory is configured to store program instructions and data that are necessary to a network device or a terminal device. The chip system may include a chip, or may include a chip and another discrete component.

**BRIEF DESCRIPTION OF DRAWINGS**

FIG. 1 is a schematic diagram of a structure of an artificial intelligence main framework according to an embodiment of this application;
FIG. 2 is a system architectural diagram of a placement location obtaining system according to an embodiment of this application;

FIG. 3 is a schematic flowchart of a model training method according to an embodiment of this application;

FIG. 4 is a schematic diagram of size information of accommodation space according to an embodiment of this application;

FIG. 5 is a schematic diagram of size information of accommodation space in a model training method according to an embodiment of this application;

FIG. 6 is two schematic diagrams of a first object in a model training method according to an embodiment of this application;

FIG. 7 is two schematic diagrams of a first object in a model training method according to an embodiment of this application;

FIG. 8 is two schematic diagrams of a candidate placement location in a model training method according to an embodiment of this application;

FIG. 9 is a schematic flowchart of generating M first score values in a model training method according to an embodiment of this application;

FIG. 10 is a schematic flowchart of a data processing method according to an embodiment of this application;

FIG. 11 is a schematic diagram of placement indication information in a placement location obtaining method according to an embodiment of this application;

FIG. 12 is a schematic diagram of a structure of a placement location obtaining apparatus according to an embodiment of this application;

FIG. 13 is a schematic diagram of a structure of a model training apparatus according to an embodiment of this application;

FIG. 14 is a schematic diagram of a structure of a training device according to an embodiment of this application;

FIG. 15 is a schematic diagram of a structure of an execution device according to an embodiment of this application; and

FIG. 16 is a schematic diagram of a structure of a chip according to an embodiment of this application.

## DESCRIPTION OF EMBODIMENTS

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner for describing objects having a same attribute in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, system, product, or device.

The following describes embodiments of this application with reference to the accompanying drawings. A person of ordinary skill in the art may learn that, with development of technologies and emergence of new scenarios, the technical solutions provided in embodiments of this application are also applicable to a similar technical problem.

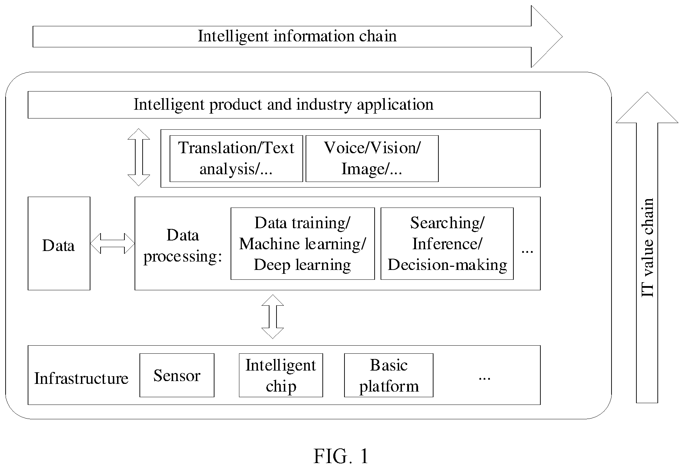

An overall working procedure of an artificial intelligence system is first described. Refer to FIG. 1. FIG. 1 shows a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support through a basic platform. The infrastructure communicates with the external world through a sensor. A computing capability is provided by intelligent chips. For example, the intelligent chips include but are not limited to hardware acceleration chips such as a central processing unit (central processing unit, CPU), a neural-network processing unit (neural-network processing unit, NPU), a graphics processing unit (graphics processing unit, GPU), an application-specific integrated circuit (application specific integrated circuit, ASIC), and a field-programmable gate array (field programmable gate array, FPGA). The basic platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, speech, and text, further relates to internet of things data of a conventional device, and includes service data of an existing system and perception data such as force, displacement, a liquid level, a temperature, and humidity.

(3) Data processing

Data processing usually includes a manner such as data training, machine learning, deep learning, searching, inference, or decision-making.
Machine learning and deep learning may mean performing symbolic and formalized intelligent information modeling, extraction, preprocessing, training, and the like on data.
Inference is a process in which a human intelligent inference manner is simulated in a computer or an intelligent system, and machine thinking and problem resolving are performed by using formalized information according to an inference control policy. A typical function is searching and matching.
Decision-making is a process in which a decision is made after intelligent information is inferred, and usually provides functions such as classification, ranking, and prediction.

(4) General capability

After data processing mentioned above is performed on data, some general capabilities may be further formed based on a data processing result, for example, may be an algorithm or a general system, for example, image classification, image personalized management, battery charging personalized management, text analysis, computer vision processing, and voice recognition.

(5) Intelligent product and industry application

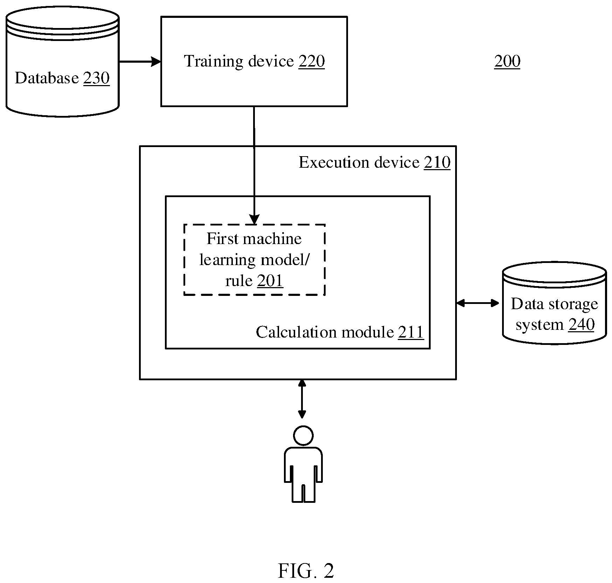

Intelligent products and industry applications are products and applications of the artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a safe city, and the like.
Embodiments of this application are mainly applied to application scenarios such as placement or warehousing in the foregoing various fields. For example, if a user needs to place a plurality of objects in a vehicle, to transport the plurality of objects through the vehicle, there is a problem of how to properly use placement space in a vehicle carriage. In another example, for example, if a user needs to put a plurality of objects into a plurality of containers, there is also a problem of how to maximize utilization of the plurality of containers. In still another example, for example, if a user needs to store a plurality of objects in a warehouse, there is also a problem of how to maximize storage space in the warehouse. It should be understood that the application scenarios in embodiments of this application are not exhaustively listed herein. In the foregoing various scenarios, the placement location obtaining method provided in embodiments of this application may be used, so that a placement location may be automatically generated by using a first machine learning model. This avoids excessive dependence on experience of a technical person. In addition, a plurality of candidate placement locations are first generated based on size information of an unoccupied area and size information of a plurality of to-be-placed objects, then each of the plurality of candidate placement locations is scored based on the size information of the unoccupied area by using the first machine learning model, and one placement location is selected from the plurality of candidate placement locations based on a score value of each candidate placement location. That is, size information of accommodation space and size information of each object are fully considered in a process of selecting each placement location. This helps improve utilization of the accommodation space.
To facilitate understanding of this solution, a placement location obtaining system provided in an embodiment of this application is first described with reference to FIG. 2. FIG. 2 is a system architectural diagram of a placement location obtaining system according to an embodiment of this application. In FIG. 2, the placement location obtaining system 200 includes an execution device 210, a training device 220, a database 230, and a data storage system 240. The execution device 210 includes a calculation module 211.

In a training phase, the database 230 stores a training data set, the training data set may include a plurality of tasks, and each task is to put a plurality of objects into one or more accommodation spaces. The training device 220 generates a first machine learning model/rule 201, and performs iterative training on the first machine learning model/rule 201 by using the training data set in the database, to obtain a mature first machine learning model/rule 201. It should be noted that the database 230 may be specifically represented as a storage medium in any form, and is not limited to a database in a conventional sense.

In an inference phase, the execution device 210 may invoke data, code, and the like in the data storage system 240, or may store data, instructions, and the like in the data storage system 240. The data storage system 240 may be configured in the execution device 210, or may be a memory outside the execution device 210. The calculation module 211 may generate, based on first size information of an unoccupied area in an accommodation space and M candidate placement locations by using the mature first machine learning model/rule 201, M first score values that are in a one-to-one correspondence with the M candidate placement locations, so that the execution device 210 may select a first placement location from the M candidate placement locations based on the M first score values.

In some embodiments of this application, for example, in FIG. 2, the term "user" may directly interact with the execution device 210. In other words, the execution device 210 and a client device are integrated into a same device. For example, in some application scenarios, the execution device 210 may be represented as an intelligent robot having a moving function. In this case, in the inference phase, after selecting the first placement location, the execution device 210 may place one determined object in the plurality of objects into a determined location in the accommodation space according to an indication of the first placement location. In some other application scenarios, the execution device 210 may be specifically represented as an execution device configured with a display screen. In this case, in the inference phase, after completing a task (that is, after repeatedly performing an operation of selecting a placement location for a plurality of times), the execution device 210 may present a three-dimensional schematic diagram to a user. The three-dimensional schematic diagram shows indication information of placement locations of the plurality of objects in the accommodation space, and the like. The execution device 210 may alternatively be represented in another form. This is not enumerated herein. However, FIG. 2 is merely a schematic architectural diagram of two placement location obtaining systems according to an embodiment of the present invention, and a location relationship between devices, components, modules, and the like shown in the figure does not constitute any limitation.

In some other embodiments of this application, the execution device 210 and the client device may be independent devices. The execution device 210 is configured with an input/output interface, and exchanges data with the client device. The "user" may input at least one task into the execution device 210 through the input/output interface of the client device, and the execution device 210 returns a processing result to the client device through the input/output interface.

It can be learned from descriptions in FIG. 2 that embodiments of this application include the inference phase and the training phase, and procedures of the inference phase and the training phase are different. The following separately describes specific implementation procedures of the foregoing two phases.

1. Training phase

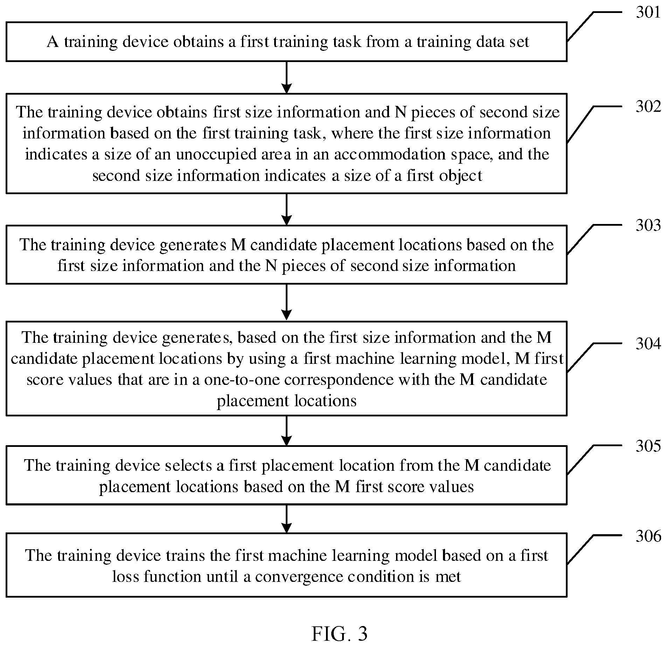

In embodiments of this application, specifically, FIG. 3 is a schematic flowchart of a model training method according to an embodiment of this application. The method may include the following steps.

301: A training device obtains a first training task from a training data set.

In this embodiment of this application, the training device stores the training data set, the training data set includes a plurality of training tasks, and the training device may randomly select one first training task from the plurality of training tasks. The first training task indicates to place a plurality of second objects (which may also be referred to as initial to-be-placed objects) in an accommodation space. Each of the plurality of second objects is a regular object. For example, the second object may be represented as a cuboid, a cube, a cylinder, a cone, or another type of regular object. Details are not exhaustively listed herein. The accommodation space may be specifically represented as a physical space surrounded by a physical substance, for example, a physical space such as a container, a carriage, or a warehouse. Details are not exhaustively listed herein. Alternatively, the accommodation space may be represented as a space that is manually defined, instead of a space surrounded by a physical substance. For example, the accommodation space may be a space in an open space, and a user manually defines an area of a bottom surface of the accommodation space, a height of the accommodation space, and the like. A representation form of the accommodation space in an actual application scenario is not limited herein.

Further, the first training task includes identification information of each of the plurality of second objects, size information of each second object, and size information of the entire accommodation space. The size information of the second object may be considered as space state information in state information of the second object, and the size information of the accommodation space may be considered as space state information in state information of the accommodation space.

Further, generally, the accommodation space is specifically represented as a cuboid or a cube, and the size information of the accommodation space includes a length, a width, and a height of the accommodation space. In this application scenario, no object is placed in the accommodation space. Therefore, in an implementation, the training device may directly record a size value of the accommodation space. In another implementation, the training device may alternatively use a three-dimensional tensor to represent the size information of the accommodation space. Specifically, the accommodation space is divided into a plurality of cubes. The training device may generate a three-dimensional tensor whose size is the same as that of the accommodation space. The three-dimensional tensor includes a plurality of two-dimensional matrices. A size of each of the plurality of two-dimensional matrices corresponds to a bottom surface of the accommodation space, and a height of the three-dimensional tensor corresponds to a height of the accommodation space. Further, a quantity of rows of the two-dimensional matrix indicates a first size of the bottom surface of the accommodation space, and a quantity of columns of the two-dimensional matrix indicates a second size of the bottom surface of the accommodation space. If the first size is a length, the second size is a width; or if the first size is a width, the second size is a length. Each value in the three-dimensional tensor corresponds to one cube in the accommodation space. If a space represented by one of the plurality of cubes is occupied, a value corresponding to the cube in the three-dimensional tensor is 1; or if a space represented by one of the plurality of cubes is not occupied, a value corresponding to the cube in the three-dimensional tensor is 0. For example, if the length of the accommodation space is 6 meters, the width is 3 meters, and the height is 2 meters, a 12*6*4 three-dimensional tensor may be used to represent the accommodation space. To be specific, a value in the three-dimensional tensor corresponds to a block of 50 cm*50 cm*50 cm in the accommodation space, and indicates whether a space represented by the block of 50 cm*50 cm*50 cm is occupied.

In another implementation, after obtaining the size information of the accommodation space, the training device may alternatively use a two-dimensional matrix to represent the size information of the accommodation space. A quantity of rows of the two-dimensional matrix indicates a first size of the bottom surface of the accommodation space, and a quantity of columns of the two-dimensional matrix indicates a second size of the bottom surface of the accommodation space. If the first size is a length, the second size is a width. To be specific, if the quantity of rows of the two-dimensional matrix indicates the length of the bottom surface of the accommodation space, the quantity of columns of the two-dimensional matrix indicates the width of the bottom surface of the accommodation space. Alternatively, if the first size is a width, the second size is a length. To be specific, if the quantity of rows of the two-dimensional matrix indicates the width of the bottom surface of the accommodation space, the quantity of columns of the two-dimensional matrix indicates the length of the bottom surface of the accommodation space. The bottom surface of the accommodation space is divided into a plurality of first areas. There is no intersection between different first areas, sizes of different first areas may be the same, and each first area may be specifically represented as a grid. The two-dimensional matrix includes a plurality of matrix values that are in a one-to-one correspondence with the plurality of first areas, and each matrix value indicates a remaining space of one of the plurality of first areas in a height direction. In this embodiment of this application, in comparison with a case in which first size information is represented in a form of a three-dimensional tensor, the first size information is represented in a form of a two-dimensional matrix, and the first size information in the form of the two-dimensional matrix is input into a first machine learning model. This greatly reduces computing power required in an operation process of the first machine learning model, improves efficiency of a score value calculation process, and can reduce memory occupation in a model training process. As a quantity of to-be-placed objects included in a training task increases, if the three-dimensional tensor is used to represent size information of a first object, a size of memory occupied by the size information that is used to describe the object also increases. This causes a problem of memory occupation overflow.

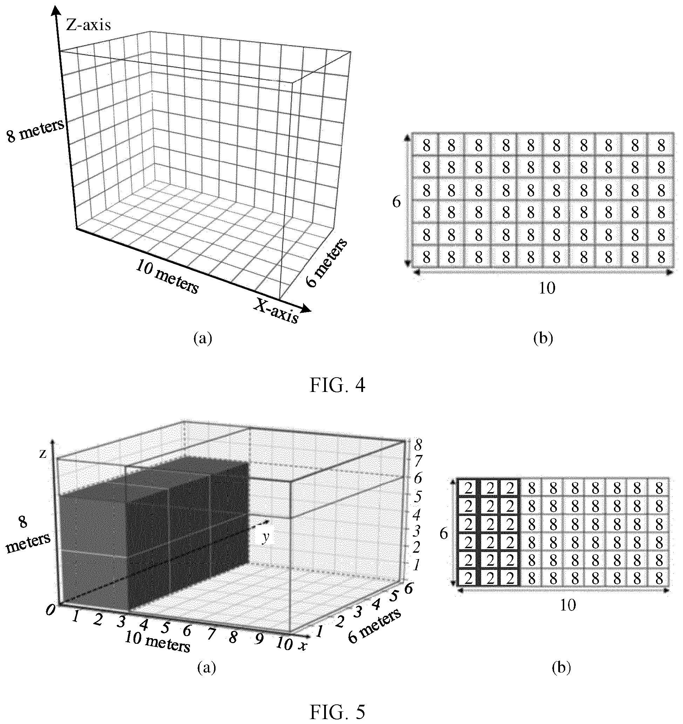

For more intuitive understanding of this solution, refer to FIG. 4. FIG. 4 is a schematic diagram of size information of an accommodation space according to an embodiment of this application. FIG. 4 includes two schematic sub-diagrams (a) and (b). The schematic sub-diagram (a) in FIG. 4 is a schematic diagram of an accommodation space, where a length of the accommodation space is 10 meters, a width of the accommodation space is 6 meters, and a height of the accommodation space is 8 meters. The schematic sub-diagram (b) in FIG. 4 shows a two-dimensional matrix corresponding to the accommodation space, where a quantity of rows of the two-dimensional matrix is 6, and indicates that a width of a bottom surface of the accommodation space is 6; and a quantity of columns of the two-dimensional matrix is 10, and indicates that a length of the bottom surface of the accommodation space is 10. The bottom surface of the accommodation space is divided into 60 first areas, each first area indicates a 1 m*1 m grid, and each matrix value in the two-dimensional matrix indicates a remaining space of one first area in a height direction. Because no object is placed in the accommodation space, matrix values corresponding to all first areas are 8, that is, it indicates that the remaining space of all the first areas in the height direction is 8 meters. It should be understood that, the example in FIG. 4 is merely for ease of understanding of this solution, and is not intended to limit this solution. It should be noted that, herein, only an example in which the accommodation space is represented as a cuboid or a cube is used. The accommodation space may alternatively be represented as a regular object of another shape. Details are not exhaustively listed herein.

Identification information of each second object uniquely identifies one second object. The identification information may be specifically represented in a digital code, a character code, or another form. For example, identification information of one second object may be "0000001", "0000023 ", "FM000369", or the like. Details are not exhaustively listed herein.

Correspondingly, the training device may directly record a size value of each second object as size information of each second object. For example, if the second object is a cuboid, the training device records values of a length, a width, and a height of the second object as the size information of each second object. For another example, if the second object is a cylinder, the training device records a radius of a bottom surface and a height of the second object. Details are not exhaustively listed herein. Alternatively, the training device may represent the size information of the second object by using a three-dimensional tensor, a two-dimensional matrix, or the like. A specific representation manner is similar to that of representing the size information of the accommodation space by using a three-dimensional tensor or a two-dimensional matrix. Details are not described herein again.

302: The training device obtains the first size information and N pieces of second size information based on the first training task, where the first size information indicates a size of an unoccupied area in the accommodation space, and the second size information indicates a size of the first obj ect.

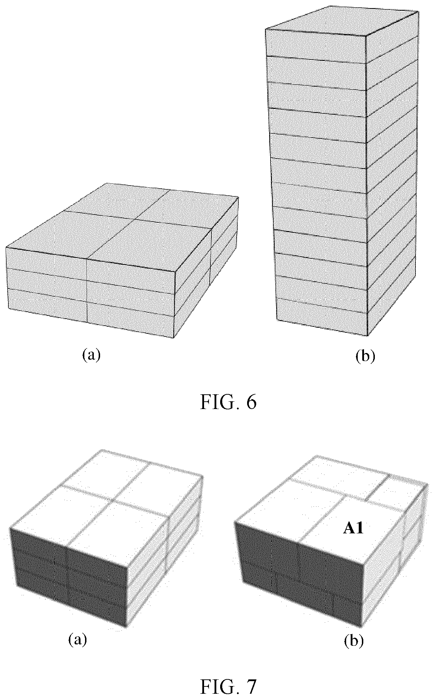

In this embodiment of this application, the training device needs to obtain the first size information, where the first size information indicates the size of the unoccupied area in the accommodation space; and obtain the second size information of each of the N first objects (that is, the to-be-placed objects are formed by stacking at least one second object, and for a specific representation form of the first object, refer to descriptions in the embodiments corresponding to FIG. 6 and FIG. 7 subsequently) based on the size information of the plurality of second objects.

For the first size information of the unoccupied area in the accommodation space, if the training device enters step 302 by performing step 301, to be specific, no object is placed in the accommodation space, the unoccupied area in the accommodation space is the entire accommodation space, and the first size information of the unoccupied area in the accommodation space is size information of the entire accommodation space, the training device may directly obtain the first size information of the unoccupied area in the accommodation space from the first training task.

If the training device enters step 302 by performing step 305 or step 306, to be specific, at least one object has been placed in the accommodation space, and the unoccupied area in the accommodation space is a part of the entire accommodation space, the training device needs to generate the first size information of the unoccupied area in the accommodation space based on the first training task and location information of each of the at least one first object that has been placed in the accommodation space.

Correspondingly, the training device may directly record a size value of the unoccupied area in the accommodation space, or may use a three-dimensional tensor or a two-dimensional matrix to represent the first size information of the unoccupied area in the accommodation space.

For more intuitive understanding of this solution, refer to FIG. 5. FIG. 5 is a schematic diagram of size information of an accommodation space in a model training method according to an embodiment of this application. FIG. 5 includes two schematic sub-diagrams (a) and (b). The schematic sub-diagram (a) in FIG. 5 is a schematic diagram of an accommodation space, where a length of the accommodation space is 10 meters, a width of the accommodation space is 6 meters, and a height of the accommodation space is 8 meters. The schematic sub-diagram (b) in FIG. 5 shows a two-dimensional matrix corresponding to the accommodation space, where a quantity of rows of the two-dimensional matrix is 6, and indicates that a width of a bottom surface of the accommodation space is 6; and a quantity of columns of the two-dimensional matrix is 10, and indicates that a length of the bottom surface of the accommodation space is 10. The bottom surface of the accommodation space is divided into 60 first areas, each first area indicates a 1 m*1 m grid, and each matrix value in the two-dimensional matrix indicates a remaining space of one first area in a height direction. Because an object is placed in a space whose width is 3 m, length is 6 m, and hight is 6 m in the accommodation space, as shown in the schematic sub-diagram (b) in FIG. 5, a matrix value corresponding to a part of first areas is 2, that is, it indicates that a remaining space of the part of first areas in the height direction is 2 meters (8 meters minus 6 meters is 2 meters); and a matrix value corresponding to the other part of first areas is 8, that is, it indicates that a remaining space of the first area in the height direction is 8 meters (no object is placed in the part of areas). It should be understood that the example in FIG. 5 is merely for ease of understanding of this solution, and is not intended to limit this solution. It should be noted that, herein, only an example in which the accommodation space is represented as a cuboid or a cube is used. The accommodation space may alternatively be represented as a regular object of another shape. Details are not exhaustively listed herein.

For a process of obtaining the second size information of each of the N first objects based on the size information of the plurality of second objects, in one case, the training device divides the plurality of second objects into L groups of second objects, each group of second objects includes at least one second object, second objects in a same group have a same size, second objects in different groups have different sizes, and L is a positive integer. For second objects in a target group in at least two groups of second objects, where the second objects in the target group include at least two second objects, the training device stacks the at least two second objects in S different stacking manners to obtain S first objects; and generates second size information of each of the S first objects based on size information of each of the second objects in the target group. Stacking along the length direction, stacking along the width direction, and stacking along the height direction are different stacking manners, and all stacking manners are not exhaustively listed herein.

The training device performs the foregoing operation on each of the at least two groups of second objects, to obtain the second size information of each of the N first objects. $N=\sum_{i=1}^{L} S_i$ , and $S_i$ indicates that the training device stacks second objects in an $i^{th}$ group in the L groups in different stacking manners.

For more intuitive understanding of this solution, refer to FIG. 6. FIG. 6 is two schematic diagrams of a first object in a model training method according to an embodiment of this application. In FIG. 6, an example in which the second objects in the target group include 12 second objects of a same size is used. FIG. 6 includes two schematic sub-diagrams (a) and (b). The schematic sub-diagram (a) in FIG. 6 and the schematic sub-diagram (b) in FIG. 6 respectively show two different stacking manners of the 12 second objects. It should be understood that the example in FIG. 6 is merely for ease of understanding of this solution, and is not intended to limit this solution.

In another case, the training device directly determines the second object as the first object, that is, concepts of the first object and the second object are completely the same. In this case, the training device directly obtains the second size information of each of the N first objects (namely, the second objects) from the first training task.

In another case, the training device divides the plurality of second objects into at least two groups of second objects, where one of the at least two groups of second objects includes at least one second object, second objects in a same group have a same size, and second objects in different groups have different sizes. The at least two groups of second objects include a first group of objects and a second group of objects, and the first group of objects and the second group of objects are different groups in the at least two groups of second obj ects. The training device stacks, in a first stacking manner, at least one second object included in the first group of obj ects, to obtain a first to-be-combined object (which may also be referred to as a simple block); stacks, in a second stacking manner, at least one second object included in the second group of objects, to obtain a second to-be-combined object; and then stacks the first to-be-combined object and the second to-be-combined object, to obtain one first object (which may also be referred to as a complex block) of the N first objects. The training device calculates the second size information of the first object based on the size information of each second object. That is, after stacking objects of a same size, the training device obtains a to-be-combined object, and then stacks one or more to-be-combined objects, to obtain one first object.

For more intuitive understanding of this solution, refer to FIG. 7. FIG. 7 is two schematic diagrams of a first object in a model training method according to an embodiment of this application. FIG. 7 includes two schematic sub-diagrams (a) and (b). The schematic sub-diagram (a) in FIG. 7 represents a simple block (namely, an example of a to-be-combined object) including 12 second objects of a same size. The schematic sub-diagram (b) in FIG. 7 represents a complex block (namely, an example of a first object). The schematic sub-diagram (b) in FIG. 7 is formed by stacking a plurality of simple blocks, where A1 represents the simple block in the schematic sub-diagram (a) in FIG. 7. It should be understood that the example in FIG. 7 is merely for ease of understanding of this solution, and is not intended to limit this solution.

303: The training device generates M candidate placement locations based on the first size information and the N pieces of second size information.

In this embodiment of this application, after obtaining the first size information of the unoccupied area in the accommodation space and the second size information of each of the N first objects (final to-be-placed objects), the training device may generate the M candidate placement locations corresponding to the N first objects. The M candidate placement locations may also be referred to as M candidate placement locations, and M is an integer greater than or equal to 1. One of the M candidate placement locations indicates one placement location of a target object in the unoccupied area, and the target object is one of the N first objects. In other words, each candidate placement location uniquely points to one placement location of one of the N first objects in the unoccupied area in the accommodation space.

It should be noted that, in a process of performing step 303, the training device needs to meet at least the following several constraint conditions: The first object cannot exceed a boundary of the accommodation space, locations of different first objects cannot overlap, and different first objects are vertically placed in the accommodation space. Optionally, in a process of performing step 303, the training device further needs to meet the following constraint conditions: The first object is not allowed to be suspended, to be specific, a bottom surface of any first object needs to be fully supported by the bottom surface of the accommodation space or another first object; and each first object can be placed only in one or more specified directions.

Further, each candidate placement location may be specifically represented as a vector (where the vector may also be referred to as an action vector), and the vector may include location information of the target object (namely, any one of the N first objects) in the unoccupied area and indication information of the target object.

The training device may establish a first coordinate system corresponding to the accommodation space. The first coordinate system is a three-dimensional coordinate system (which may also be referred to as a spatial coordinate system). A coordinate system origin of the first coordinate system may be any vertex of the accommodation space, a central point of the accommodation space, a central point of the bottom surface of the accommodation space, another location point, or the like. This is not limited herein. If the target object is a cuboid or a cube, the location information of the target object in the unoccupied region may be three-dimensional coordinates (which may also be referred to as spatial coordinates) of each vertex of the target object in the first coordinate system, or may be three-dimensional coordinates of two vertices that are farthest from each other in the eight vertices included in the target object in the first coordinate system, or may be three-dimensional coordinates of a central point of the target object and any vertex of the target object in the first coordinate system, and the like. If the target object is a cylinder, the location information of the target object in the unoccupied region may include three-dimensional coordinates of a circle center of a bottom surface and a circle center of a top surface of the cylinder in the first coordinate system and a radius/diameter of the bottom surface of the cylinder, or may include three-dimensional coordinates of a circle center of a bottom surface of the cylinder and a center of the cylinder in the first coordinate system and a radius/diameter of the bottom surface of the cylinder, or may include three-dimensional coordinates of a circle center of a top surface of the cylinder and a center of the cylinder in the first coordinate system and a radius/diameter of a bottom surface of the cylinder, and the like. If the target object is a cone, the location information of the target object in the unoccupied area may include three-dimensional coordinates of a circle center of a bottom surface of the cone in the first coordinate system, three-dimensional coordinates of a tip of the cone in the first coordinate system, a radius/diameter of the bottom surface of the cone, and the like. It should be understood that specific information included in the location information of the target object in the unoccupied region should be flexibly specified with reference to an actual application environment. This is not limited herein.

The indication information of the target object points to a determined target object in the N first objects. The indication information of the target object may use the identification information of the target object. Because the target object includes at least one second object, if a volume of the entire target object can be calculated based on the location information of the target object in the unoccupied area, the indication information of the target object may include an average volume of all second objects in the at least one second object, the location information of the target object in the unoccupied area, and the like. The indication information of the target object is not exhaustively listed herein.

In an example, herein, the first object is a cuboid or a cube. For example, each of the M candidate placement locations $a_t = [x_1, y_1, z_1, x_2, y_2, z_2, \bar{v}]$, where $[x_1, y_1, z_1]$ and $[x_2, y_2, z_2]$ respectively represent three-dimensional coordinates of two vertices that are farthest from each other in the first object in the first coordinate system, and $[x_1, y_1, z_1]$ and $[x_2, y_2, z_2]$ may also represent a volume of the first object, and $\bar{v}$ represents an average volume of at least one second object forming the first object. It should be understood that the foregoing example is merely an example, and is not intended to limit this solution.

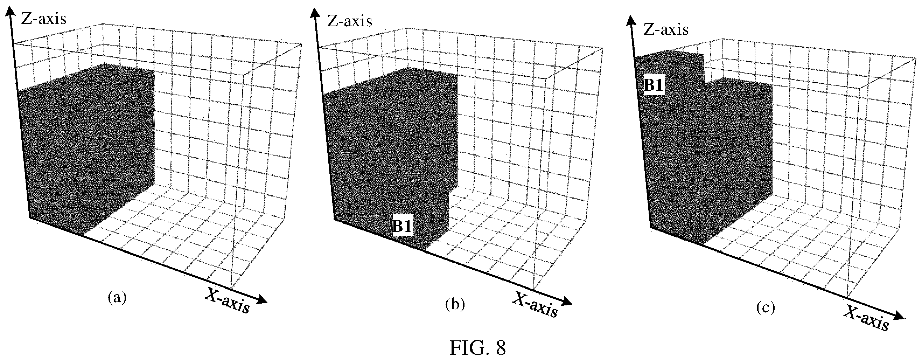

Specifically, for any one of the N first objects, after obtaining the first size information of the unoccupied area in the accommodation space and the second size information of the first object, the training device determines whether the first object can be placed in the unoccupied area in the accommodation space. If the first object can be placed in the unoccupied area in the accommodation space, the training device obtains m placement locations in which the first object can be placed in the unoccupied area in the accommodation space, and generates m candidate placement locations corresponding to the first object, where m is an integer greater than or equal to 1; or if the first object cannot be placed in the unoccupied area in the accommodation space, the training device continues to obtain a next first object from the N first objects. The training device performs the foregoing operation on each of the N first objects, to obtain the M candidate placement locations corresponding to each of the N first objects. For more intuitive understanding of this solution, refer to FIG. 8. FIG. 8 is two schematic diagrams of a candidate placement location in a model training method according to an embodiment of this application. FIG. 8 includes three schematic sub-diagrams (a), (b), and (c). The schematic sub-diagram (a) in FIG. 8 represents an unoccupied area in an accommodation space. The schematic sub-diagram (b) and the schematic sub-diagram (c) in FIG. 8 respectively represent two different candidate placement locations of a first object (namely, B1 in FIG. 8) in the unoccupied area in the accommodation space. It should be understood that the example in FIG. 8 is merely for ease of understanding, and is not intended to limit this solution.

304: The training device generates, based on the first size information and the M candidate placement locations by using the first machine learning model, M first score values that are in a one-to-one correspondence with the M candidate placement locations.

In this embodiment of this application, after generating the M candidate placement locations, the training device may score, by using the first machine learning model, a degree of adaptation between each candidate placement location and the first size information, to obtain the M first score values that are in a one-to-one correspondence with the M candidate placement locations. The first machine learning model may specifically use a neural network, or may use an algorithm other than the neural network. It should be noted that score values generated by the execution device for different candidate placement locations by using the first machine learning model may be the same. A concept of "one-to-one correspondence" herein is that the execution device generates one first score value for each candidate placement location. In other words, although values of different first score values in the M first score values may be the same, each candidate placement location clearly corresponds to one first score value. For example, an array may be used to store the M first score values, and a subscript of the array may be used to distinguish between the candidate placement locations.

Specifically, in an implementation, the first machine learning model includes a first submodel and a second submodel. Step 304 may include: The training device inputs the first size information and the M candidate placement locations into the first submodel, to obtain M second score values that are output by the first submodel and that are in a one-to-one correspondence with the M candidate placement locations. It should be noted that second score values generated by the execution device for different candidate placement locations by using the first submodel may be the same. The foregoing "one-to-one correspondence" concept is that the execution device generates one second score value for each candidate placement location by using the first submodel. In other words, although values of different second score values in the M second score values may be the same, each candidate placement location corresponds to one second score value.

The training device inputs N first volume values that are in a one-to-one correspondence with the N first objects into the second submodel, to obtain N third score values that are output by the second submodel and that are in a one-to-one correspondence with the N first objects. Correspondingly, third score values generated by the execution device for different first objects by using the second submodel may be the same. The foregoing concept of "one-to-one correspondence" is that the execution device generates one third score value for each first object by using the second submodel. In other words, although values of different third score values in the N third score values may be the same, each first object corresponds to one third score value.

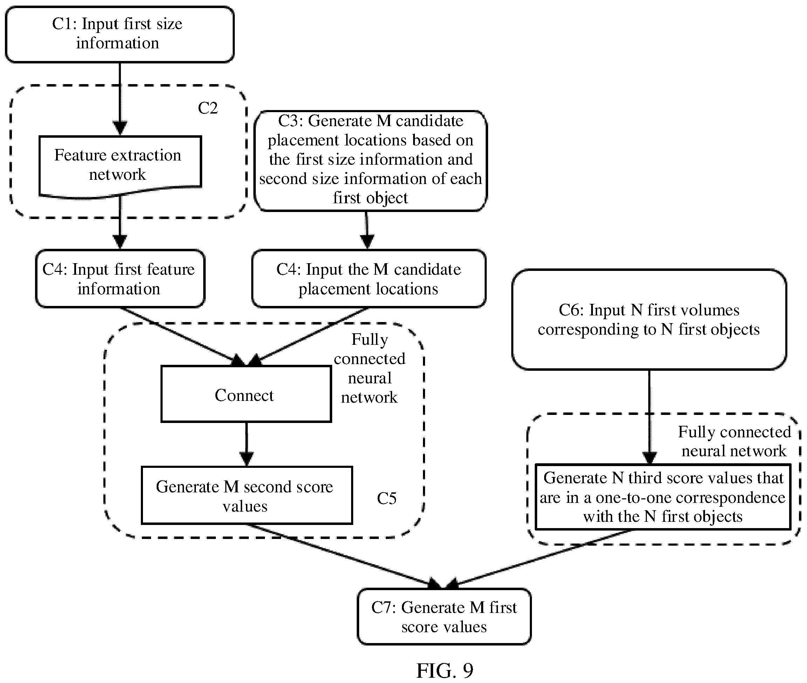

The training device generates the M first score values based on the M second score values, the N third score values, and a first correspondence (where a specific meaning of the first correspondence is described below), where the first correspondence is a correspondence between the M second score values and the N third score values. The following describes specific implementation steps of this implementation with reference to FIG. 9. It should be understood that FIG. 9 is only a specific example of this implementation, and does not constitute a limitation on this implementation.

Because one first object includes at least one second object, if the first object includes at least one second object with a same volume, the first volume may be an average volume of the at least one second object; or if the first object includes at least two second objects with different volumes, the first volume may be any one of the following: an average volume of the at least one second object, a volume of a largest second object in the at least one second object, or a volume of a smallest second object in the at least one second object.

The first submodel is any one of the following neural networks: a deep Q network (deep Q network, DQN), a double deep Q network (double deep Q network, DDQN), a dueling double deep Q network (dueling double deep Q network, Dueling DDQN), or a nature deep Q network (nature deep Q network, Nature DQN), and the second submodel is a fully connected neural network. In this embodiment of this application, a plurality of specific implementations of the first submodel are provided, to improve implementation flexibility of this solution.

More specifically, for a process of generating the second score value of the candidate placement location, the first submodel may be further split into a feature extraction network and a fully connected neural network. The training device inputs the first size information into the feature extraction network of the first submodel, to perform feature extraction on the first size information through the feature extraction network of the first submodel, to obtain first feature information. The first size information may be represented as a three-dimensional tensor or a two-dimensional matrix. The foregoing feature extraction network may be specifically represented as a convolutional neural network or another type of neural network. The first feature information may be specifically represented as a state vector corresponding to the first size information, or may be referred to as a state vector of the unoccupied area in the accommodation space.

The training device inputs the first feature information and the M candidate placement locations into the fully connected neural network of the first submodel, to connect the first feature information to each of the M candidate placement locations through the fully connected neural network of the first submodel (that is, pair the first feature information with each candidate placement location), to generate the M second score values. Each candidate placement location may be specifically represented as an action vector. To be specific, the training device connects the state vector (namely, the first feature information) to each of the M action vectors through the fully connected neural network of the first submodel, and generates the M second score values that are in a one-to-one correspondence with M connected state-action vectors, that is, score a degree of adaptation between each action vector (namely, the candidate placement location) and the state vector (namely, the first size information of the unoccupied area).

Further, in an implementation, the training device inputs the M candidate placement locations into the fully connected neural network of the first sub-model for M times. In other words, the training device inputs a next candidate placement location into the fully connected neural network of the first sub-model only after generating a score value of a candidate placement location. In another implementation, the training device inputs the M candidate placement locations into the fully connected neural network of the first submodel at a time, to separately generate a score value of each of the M candidate placement locations by using the fully connected neural network of the first submodel.

In this embodiment of this application, feature extraction is performed on the first size information to obtain the first feature information, and the first feature information is connected to each of the M candidate placement locations, to obtain M connection pairs. In this way, the degree of adaptation between the first feature information and each candidate placement location may be scored, that is, the M second score values that are in a one-to-one correspondence with the M candidate placement locations are obtained, so that a specific implementation of generating the second score value is provided, a process of generating the second score value is refined, and a degree of refined management of this solution is improved.

For a process in which the training device generates the M first score values based on the M second score values, the N third score values, and the first correspondence, because the M second score values are in a one-to-one correspondence with the M candidate placement locations, it may be learned that, with reference to the descriptions in step 303, the M candidate placement locations correspond to the at least one of the N first objects; and the N third score values are in a one-to-one correspondence with the N first objects. In this case, the training device may generate the first correspondence based on a second correspondence and a third correspondence. The second correspondence is a correspondence between the M candidate placement locations and the at least one of the N first objects, and the third correspondence is a correspondence between the N third score values and the N first objects. The training device obtains, from the N third score values based on the first correspondence, at least one third score value corresponding to a target score value, where the target score value is any score value in the M second score values; and performs first calculation on each third score value in the at least one third score value corresponding to the target score value and the target score value, to obtain the first score value. The first calculation may be an addition, subtraction, multiplication, or another operation.

In this embodiment of this application, after the M second score values and the N third score values are obtained, an addition operation is performed on the M second score values and the N third score values based on the first correspondence between the M second score values and the N third score values, to generate a final first score value. This provides a specific implementation solution of generating the first score value, avoids a negative value in the first score value by using an addition manner, and avoids an excessively high value in the first score value by using an addition manner compared with using a multiplication manner, to improve smoothness of the placement location selection process.

For more intuitive understanding of this solution, FIG. 9 is a schematic flowchart of generating M first score values in a model training method according to an embodiment of this application. C1: The training device inputs first size information (namely, size information of an unoccupied area in an accommodation space) in a two-dimensional matrix form into a feature extraction network of a first submodel. C2: The training device performs feature extraction on the first size information through a feature extraction network of the first submodel, and outputs first feature information (which may also be referred to as a state vector) in a vector form. C3: The training device generates M candidate placement locations based on the first size information and second size information of each first object, where each candidate placement location is specifically represented as a vector (which may also be referred to as an action vector) and is used to indicate to place one of N first objects in a candidate placement location in the unoccupied area in the accommodation space. C4: The training device inputs the first feature information and the M candidate placement locations into a fully connected neural network of the first submodel. C5: The training device connects the first feature information to each candidate placement location through the fully connected neural network, and generates M second score values that are in a one-to-one correspondence with the M candidate placement locations. C6: The training device inputs N first volumes corresponding to the N first objects into a second submodel, to generate, by using the second submodel, N third score values that are in a one-to-one correspondence with the N first objects. C7: The training device performs an addition operation based on the M second score values, the N third score values, and a first correspondence, to generate M first score values, where the first correspondence is a correspondence between the M second score values and the N third score values. It should be understood that the example in FIG. 9 is merely for ease of understanding of this solution, and is not intended to limit this solution.

In this embodiment of this application, not only each candidate placement location is scored based on the first size information and the M candidate placement locations, but also the N third score values that are in a one-to-one correspondence with the N first objects are generated based on N first volumes corresponding to the N first objects, to obtain a final score value of each candidate placement location based on the N third score values and the M second score values, and score each candidate placement location with reference to more information, to improve accuracy of each generated score value. This helps obtain a most suitable placement position, to improve utilization of the accommodation space. In addition, in a process of selecting a placement location by using a first machine learning model, the N first volume values that are in a one-to-one correspondence with the N first objects are introduced, and the first volume value is related to at least one second object that forms the first object. This helps the first machine learning model learn, based on a volume of the second object, a placement order of objects. For example, a large-sized object is first selected, and then a small object is used for filling. In this way, a container can be more fully filled, so that a placement rate/loading rate of the accommodation space can be improved.

In another implementation, step 304 may include: The training device inputs the first size information and the M candidate placement locations into the first machine learning model, to directly obtain the M first score values that are output by the first machine learning model and that are in a one-to-one correspondence with the M candidate placement locations. The first machine learning model may be specifically represented as any one of the following neural networks: a deep Q network, a double deep Q network, a dueling double deep Q network, another type of neural network, or the like. Details are not exhaustively listed herein.

More specifically, the first machine learning model may be split into the feature extraction network and the fully connected neural network. The training device inputs the first size information into the feature extraction network of the first machine learning model, to perform feature extraction on the first size information through the feature extraction network of the first machine learning model, to obtain the first feature information. The training device inputs the first feature information and the M candidate placement locations into the fully connected neural network of the first submodel, to connect the first feature information to each of the M candidate placement locations through the fully connected neural network of the first submodel (that is, pair the first feature information with each candidate placement location), to directly generate the M first score values. A concept of the first feature information in this implementation is the same as that in the foregoing implementation. Refer to the foregoing descriptions. Details are not described herein.

305: The training device selects a first placement location from the M candidate placement locations based on the M first score values.

In some embodiments of this application, after generating the M first score values that are in a one-to-one correspondence with the M candidate placement locations, the training device selects one first placement location from the M candidate placement locations based on the M first score values, where the first placement location indicates that one determined first object (which is referred to as a third object for ease of distinguishing) is selected from the N first objects, and the third object is placed at a target location in the unoccupied area in the accommodation space. It should be noted that, each of the M candidate placement locations includes location information of the third object in the unoccupied area and indication information of the third object, and the first placement location is one of the M candidate placement locations. In this case, the first placement location also includes the location information of the third object in the unoccupied area and the indication information of the third object. For a specific meaning of each candidate placement location, refer to the descriptions in step 303. Details are not described herein.

Specifically, in an implementation, the training device may select, from the M candidate placement locations, one first placement location with a highest first score value. If there are at least two same candidate placement locations with a highest first score value, the execution device selects any candidate placement location from the at least two candidate placement locations, to determine the candidate placement location as the first placement location. In another implementation, the training device may randomly select one first placement location from the M candidate placement locations. In another implementation, the training device may obtain, from the M candidate placement locations, a plurality of candidate placement locations whose first score values are greater than a first threshold, and select any candidate placement location from the plurality of candidate placement locations, to determine the candidate placement location as the first placement location, and the like. Manners of selecting one first placement location from the M candidate placement locations are not exhaustively listed herein.

After the training device selects one first placement location from the M candidate placement locations, the first placement location may be specifically represented as a vector, where the vector includes the location information of the third object in the unoccupied area and the indication information of the third object. After obtaining the first placement location, the training device places the third object in the target location in the unoccupied field in the accommodation space according to an indication of the first placement location.

306: The training device trains the first machine learning model based on a first loss function until a convergence condition is met.

In this embodiment of this application, the training device calculates a function value of the first loss function, and performs gradient derivation on the function value of the first loss function, to reversely update a weight parameter of the first machine learning model, to complete one time of training on the first machine learning model. The training device performs iterative training on the first machine learning model until the convergence condition is met, to obtain a mature first machine learning model.

The first loss function indicates a similarity between a maximum value of the M first score values and a fourth score value, and the fourth score value is a score value of one placement location selected from a plurality of candidate placement locations in a previous training process. The first loss function may specifically use a mean square error between the maximum value of the M first score values and the fourth score value (namely, a similarity calculation manner), a variance between the maximum value of the M first score values and the fourth score value, a loss function of another type, or the like. The convergence condition may be that a quantity of training times reaches a preset quantity of times, or the fluctuation value of the first loss function is less than or equal to a preset threshold.

Specifically, step 306 includes: The training device trains the first machine learning model based on the first loss function by using a reinforcement learning method. In this case, before calculating the first loss function, the training device further needs to calculate a first reward value, and generate the function value of the first loss function based on the first reward value, the score value of one placement location selected from the plurality of candidate placement locations in the previous training process, and the maximum value of the M first score values generated in step 304.

In an implementation, the first reward value includes only a local reward, and the local reward is negatively correlated with a ratio of a volume of a wasted space generated after step 305 is performed to a total volume of the accommodation space. A larger ratio of the volume of the wasted space generated after step 305 is performed to the total volume of the accommodation space indicates a smaller value of the local reward. In other words, the first reward value is negatively correlated with a ratio of a volume of a wasted space generated after the training device performs the first placement location to the total volume of the accommodation space.

Specifically, after performing step 305, the training device may obtain the size information of the updated unoccupied space in the accommodation space. The training device determines the volume of the wasted space based on size information of each of a plurality of remaining first objects and updated size information of the unoccupied space, calculates the first reward value, generates the function value of the first loss function based on the first reward value, and trains the first machine learning model. In this case, the training device may perform step 306 once each time after performing steps 301 to 305.

In another implementation, the first reward value is obtained through calculation based on a local reward and a global reward, and may be obtained through addition, subtraction, multiplication, or the like between the local reward and the global reward This is not limited in this embodiment of this application. A concept of the local reward is the same as that in the previous implementation, and is not described herein. The global reward is negatively correlated with a ratio of a total occupied volume of the accommodation space to the volume of the accommodation space after a first training task is completed.

The training device needs to perform step 302 to step 305 for a plurality of times before generating the global reward. In one case, after performing step 302 to step 305 for a plurality of times, the training device performs step 306 for a plurality of times at a time, to complete a plurality of times of iterative training on the first machine learning model. Specifically, although a same global reward may be shared in a same training task, the training device may obtain a first local reward when performing steps 302 to 305 for the first time, and the training device may obtain a second local reward when performing steps 302 to 305 for the second time. The first local reward and the second local reward may be different. In other words, when performing steps 302 to 305 for different times, the training device can obtain different function values corresponding to the first loss function. Therefore, after performing steps 302 to 305 for a plurality of times (that is, completing the first training task), the training device can obtain a plurality of function values of the first loss function. In this case, the training device may update the weight parameter of the first machine learning model for a plurality of times by using the plurality of function values, that is, train the first machine learning model for a plurality of times.

In another case, after performing step 302 to step 305 for a plurality of times, the training device may obtain a plurality of function values of the first loss function. The training device calculates an average value of the plurality of function values, and updates the weight parameter of the first machine learning model by using the average value, to complete one time of training on the first machine learning model.

In another case, after performing step 302 to step 305 for a plurality of times, the training device may obtain a plurality of function values of the first loss function. The training device obtains a maximum value/a minimum value of the plurality of function values, and updates the weight parameter of the first machine learning model by using the maximum value/the minimum value, to complete one time of training on the first machine learning model.

It should be noted that after obtaining the plurality of function values of the first loss function, the training device may alternatively train the first machine learning model in another manner. Details are not exhaustively listed herein.

For more intuitive understanding of this solution, the following discloses an example of a formula of the first machine learning model:

$$L(w) = E[(r_t + \gamma maxQ(s', a', w) - Q(s, a, w))^2] \quad (1)$$

L(w) represents the first loss function, $E[(r_t + \gamma maxQ(s',a',w) - Q(s, a, w))^2]$ represents expectation of calculating $(r_t + \gamma maxQ(s',a',w) - Q(s, a, w))^2$, $r_t$ represents the first reward value, $\gamma$ is a hyperparameter, $maxQ(s', a', w)$ represents a maximum value of the M first score values generated in the current training process, and Q(s, a, w) represents the score value of the placement location selected from the plurality of candidate placement locations in the previous training process. It should be understood that an example in the formula (1) is merely for ease of understanding of this solution, and is not intended to limit this solution. The first loss function may alternatively be in another form.

$$r_t = lr_t + gr_t \quad (2)$$

$$lr_t = -\frac{wv_t}{L \cdot W \cdot H} \quad (3)$$

$$gr_t = \frac{\tau \cdot r_{su}}{L \cdot W \cdot H} \quad (4)$$

$r_t$ represents the first reward value in the formula (1), $lr_t$ represents the local reward, and $gr_t$ represents the global reward. In the formula (2), that the first reward value is obtained through addition between the local reward and the global reward is used as an example. $wv_t$ represents the volume of the wasted space, in the accommodation space, that is caused after the training device performs steps 302 to 305 once (that is, after performing the placement location once), L represents a length of the accommodation space, W represents a width of the accommodation space, H represents a height of the accommodation space, and L · W · H represents the volume of the accommodation space. $r_{su}$ represents the volume of the occupied space in the accommodation space after the first training task is completed, and $\tau$ represents a hyperparameter. It should be understood that examples in the formula (2) to the formula (4) are merely for ease of understanding of this solution, and are not intended to limit this solution.

In this embodiment of this application, the training process of the first machine learning model is provided, and integrity of this solution is improved, so that a placement location may be automatically generated by using the first machine learning model obtained through training. This avoids excessive dependence on experience of a technical person. In addition, a plurality of candidate placement locations are first generated based on the size information of the unoccupied area and size information of a plurality of to-be-placed objects, then each of the plurality of candidate placement locations is scored based on the size information of the unoccupied area by using the mature first machine learning model, and one placement location is selected from the plurality of candidate placement locations based on a score value of each candidate placement location. That is, the size information of the accommodation space and size information of each object are fully considered in a process of selecting each placement location. This helps improve utilization of the accommodation space.

2. Inference phase

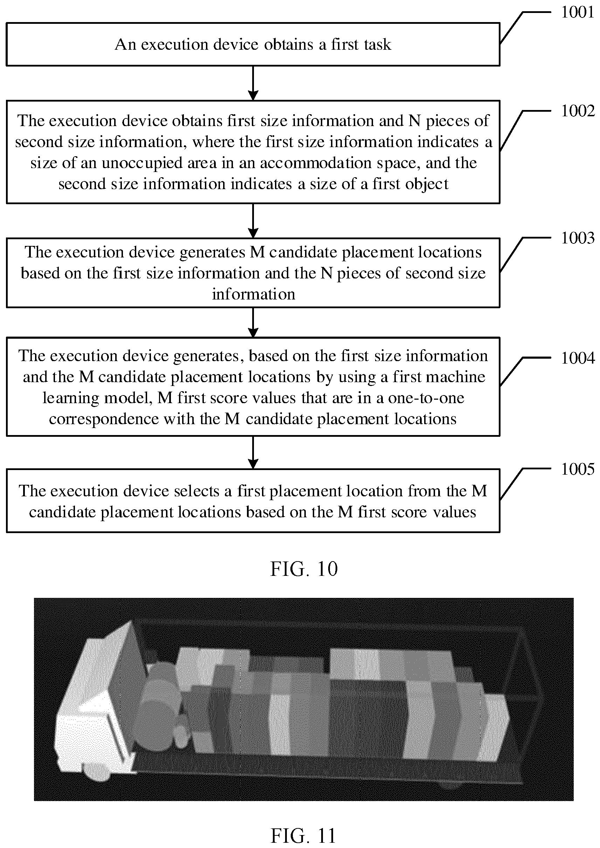

Specifically, FIG. 10 is a schematic flowchart of a data processing method according to an embodiment of this application. The method may include the following steps.

1001: An execution device obtains a first task.

In this embodiment of this application, the execution device needs to obtain an original task. The original task may be a placement task in a plurality of accommodation spaces, or may be a placement task in a single accommodation space (which may also be referred to as a single-container placement task). If the original task is a placement task in the plurality of accommodation spaces (which may also be referred to as a multi-container placement task), the execution device may convert the original task into a plurality of single-container placement tasks, and then determine the single-container placement tasks as one first task. If the original task is a single-container placement task, the execution device may directly determine the original task as one first task.

The first task indicates that a plurality of second objects (which may also be referred to as initial to-be-placed objects) are placed in the accommodation space. The first task includes identification information of each of the plurality of second objects, size information of each second object, and size information of the entire accommodation space. A concept of the first task is similar to a concept of the first training task. For a specific representation form of the first task, refer to the descriptions in the embodiment corresponding to FIG. 3. Details are not described herein.

Specifically, in an implementation, a display screen may be configured for the execution device, and a user may directly input a size value of each second object and a size value of the accommodation space through the display screen. In another implementation, the execution device may obtain a text file used to describe the first task, and identify the first task from the text file used to describe the first task, where the text file used to describe the first task carries size information of each second object and size information of the accommodation space. In another implementation, the execution device may alternatively obtain an image of each second object and an image of the accommodation space, and the execution device identifies size information of each second object, size information of the accommodation space, and the like. Manners of obtaining the first task by the execution device are not exhaustively listed herein.

1002: The execution device obtains first size information and N pieces of second size information, where the first size information indicates a size of an unoccupied area in the accommodation space, and the second size information indicates a size of a first object.

1003: The execution device generates M candidate placement locations based on the first size information and the N pieces of second size information.

1004: The execution device generates, based on the first size information and the M candidate placement locations by using a first machine learning model, M first score values that are in a one-to-one correspondence with the M candidate placement locations.

In this embodiment of this application, for specific implementations of steps 1002 to 1005, refer to the descriptions of steps 302 to 304 in the embodiment corresponding to FIG. 3. For concepts of the first size information, the second size information, the candidate placement location, the first machine learning model, and the first score value, refer to the descriptions in the embodiment corresponding to FIG. 3. Details are not described herein.

It should be noted that score values generated by the execution device for different candidate placement locations by using the first machine learning model may be the same. A concept of "one-to-one correspondence" herein is that the execution device generates one first score value for each candidate placement location. In other words, although values of different first score values in the M first score values may be the same, each candidate placement location clearly corresponds to one first score value.

1005: The execution device selects a first placement location from the M candidate placement locations based on the M first score values.

In this embodiment of this application, after generating the M first score values that are in a one-to-one correspondence with the M candidate placement locations, the execution device selects one first placement location from the M candidate placement locations based on the M first score values. A higher first score value corresponding to the first placement location indicates a higher probability that the first placement location is selected.

Specifically, the execution device may select, from the M candidate placement locations, one first placement location with a highest first score value. If there are at least two same candidate placement locations with a highest first score value, the execution device selects any candidate placement location from the at least two candidate placement locations, to determine the candidate placement location as the first placement location.

Further, in some application scenarios, if the execution device is a robot used for carrying, a mechanical arm is configured in the robot, or the execution device is a mechanical arm. After selecting the first placement location, the execution device places, according to an indication of the first placement location through the mechanical arm, one of the N first objects at a target location in the unoccupied area in the accommodation space, and re-enters step 1102, to generate a next placement location. It should be noted that, each of the M candidate placement locations includes location information of one determined first object in the unoccupied field and indication information of the determined first object, and the first placement location is one of the M candidate placement locations. In this case, the first placement location also includes location information of a third object in the unoccupied field and indication information of the third object. For a specific meaning of each candidate placement location, refer to the descriptions in the embodiment corresponding to FIG. 3. Details are not described herein.

In some other application scenarios, the execution device may perform step 302 to step 305 for a plurality of times to complete the first task, that is, after determining a stacking manner of a plurality of first objects and locations of the plurality of first objects in the accommodation space, the execution device may output placement indication information. The execution device may alternatively output placement indication information once each time after performing step 302 to step 305. Further, a manner used by the execution device to output the placement indication information may be that the execution device presents the placement indication information to the user, so that the user places the N first objects in the accommodation space based on the placement indication information. The placement indication information indicates a location of each first object in the accommodation space in the first task. The placement indication information may be specifically presented in a form of a stereoscopic diagram, or may be presented in a form of text data, and so on. Details are not exclusively listed this time. Alternatively, the execution device sends the placement indication information to another execution device, to indicate the another execution device to place the N first objects in the accommodation space. Sending the placement indication information to the another execution device may be specifically represented as placing a robot.

For more intuitive understanding of this solution, refer to FIG. 11. FIG. 11 is a schematic diagram of placement indication information in a placement location obtaining method according to an embodiment of this application. In FIG. 11, an example in which an accommodation space is a carriage is used. FIG. 11 shows placement locations of a plurality of second objects. In an actual case, an execution device may distinguish between second objects of different sizes by using different colors. That is, a second object of one size corresponds to a unique color. It should be noted that, in an actual case, the execution device may show a schematic diagram of placement of a plurality of angles. FIG. 11 is only an example, and is not intended to limit this solution.

In this embodiment of this application, a placement location may be automatically generated end-to-end by using a first machine learning model. This avoids excessive dependence on experience of a technical person. In addition, a plurality of candidate placement locations are first generated based on size information of an unoccupied area and size information of a plurality of to-be-placed objects. Then, each of the plurality of candidate placement locations is scored based on the size information of the unoccupied area by using the first machine learning model, and one placement location is selected from the plurality of candidate placement locations based on a score value of each candidate placement location. In other words, size information of an accommodation space and size information of each object are fully considered in a process of selecting each placement location. This helps improve utilization of the accommodation space.

For more intuitive understanding of beneficial effects brought by this solution, the following describes beneficial effects brought by this embodiment of this application with reference to data. A test data set is 145 packing orders. The following describes the beneficial effects brought by this embodiment of this application with reference to a table.

**Table 1**

| Used method | Quantity of containers in multi-container placement | Placement rate/Loading rate in single-container placement |
|---|---|---|
| First Fit | 803 | 83.54% |
| Best Fit | 817 | 78.31% |
| Embodiment of this application: | 770 | 89.42% |

"First Fit" and "Best Fit" are two technologies for resolving a packing problem by using a construction method. Refer to Table 1. In a multi-container placement/loading problem, the quantity of required containers can be reduced by using the placement location obtaining method provided in this embodiment of this application. In addition, in a single-container placement problem, the placement rate/loading rate in single-container placement can be improved by using the placement location obtaining method provided in this embodiment of this application. The placement rate/loading rate is a ratio of a volume of a single container in an occupied area to a total volume of the container.

Still refer to the following Table 2. Table 2 shows the placement location obtaining method provided in this embodiment of this application, namely, a manner of generating M candidate placement locations and scoring each candidate placement location, to select a determined placement location and a manner of directly scoring N first objects by using a machine learning model, to select one determined to-be-placed object from the N first objects for comparison.

**Table 2**

| Used neural network | Score a first object | Score a candidate placement location |
|---|---|---|
| DQN | 85.79 | 87.11 |
| DDQN | 86.64 | 89.42 |
| Dueling DDQN | 86.04 | 88.91 |

Data in Table 2 indicates the placement rate/loading rate of the single container in the single-container placement problem. In comparison with the second column and the third column in Table 2, it may be learned that the placement location obtaining method (that is, scoring the candidate placement location) provided in this embodiment of this application can improve the placement rate/loading rate in single-container placement.

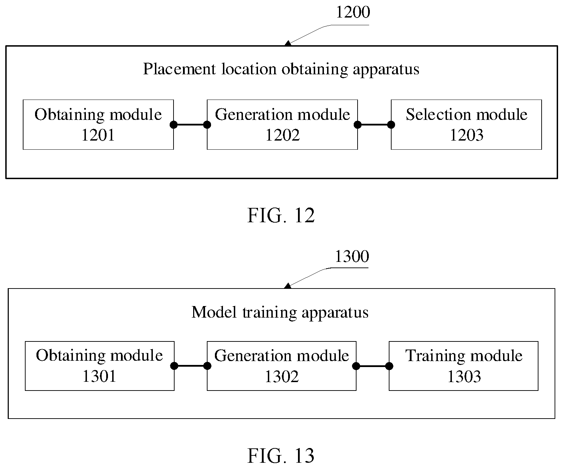

Based on the embodiments corresponding to FIG. 1 to FIG. 11, the following further provides a related device used to implement the solutions, to better implement the solutions in embodiments of this application. Specifically, FIG. 12 is a schematic diagram of a structure of a placement location obtaining apparatus according to an embodiment of this application. The placement location obtaining apparatus 1200 includes an obtaining module 1201, a generation module 1202, and a selection module 1203. The obtaining module 1201 is configured to obtain first size information and N pieces of second size information, where the first size information indicates a size of an unoccupied area in an accommodation space, and N is an integer greater than or equal to 1. The generation module 1202 is configured to generate M candidate placement locations based on the first size information and the N pieces of second size information, where one of the M candidate placement locations indicates a placement location of a target object in the unoccupied area, the target object is one object in the N first objects, and M is an integer greater than or equal to 1. The generation module 1202 is further configured to generate, based on the first size information and the M candidate placement locations by using a first machine learning model, M first score values that are in a one-to-one correspondence with the M candidate placement locations. The selection module 1203 is configured to select a first placement location from the M candidate placement locations based on the M first score values.

In a possible design, the first size information is a two-dimensional matrix, a quantity of rows of the two-dimensional matrix indicates a first size of a bottom surface of the accommodation space, a quantity of columns of the two-dimensional matrix indicates a second size of the bottom surface of the accommodation space, and if the first size is a length, the second size is a width, or if the first size is a width, the second size is a length; and the bottom surface of the accommodation space is divided into a plurality of first areas, there is no intersection between different first areas, the two-dimensional matrix includes a plurality of matrix values that are in a one-to-one correspondence with the plurality of first areas, and each matrix value indicates a remaining space of one of the plurality of first areas in a height direction.

In a possible design, the first machine learning model includes a first submodel and a second submodel, and the generation module 1202 is specifically configured to: input the first size information and the M candidate placement locations into the first submodel, to obtain M second score values that are output by the first submodel and that are in a one-to-one correspondence with the M candidate placement locations; input N first volume values that are in a one-to-one correspondence with the N first objects into the second submodel, to obtain N third score values that are output by the second submodel and that are in a one-to-one correspondence with the N first objects, where one first object includes at least one second object, and a first volume is any one of the following: an average volume of the at least one second object, a volume of a largest second object in the at least one second object, or a volume of a smallest second object in the at least one second object; and generate the M first score values based on the M second score values, the N third score values, and a first correspondence, where the first correspondence is a correspondence between the M second score values and the N third score values.

In a possible design, the generation module 1202 is specifically configured to: obtain, from the N third score values based on the first correspondence, at least one third score value corresponding to a target score value, where the target score value is any score value in the M second score values; and add each third score value in the at least one third score value corresponding to the target score value to the target score value, to obtain the first score value.

In a possible design, the generation module 1202 is specifically configured to: perform feature extraction on the first size information by using the first submodel, to obtain first feature information, and connect the first feature information to each of the M candidate placement locations by using the first submodel, to generate the M second score values.

In a possible design, the first submodel is any one of the following neural networks: a deep Q network, a double deep Q network, a dueling double deep Q network, or a nature deep Q network, and the second submodel is a fully connected neural network.

It should be noted that content such as information exchange or an execution process between the modules/units in the placement location obtaining apparatus 1200 is based on a same concept as the method embodiments corresponding to FIG. 10 and FIG. 11 in this application. For specific content, refer to the descriptions in the foregoing method embodiments in this application. Details are not described herein again.

An embodiment of this application further provides a model training apparatus. FIG. 13 is a schematic diagram of a structure of a model training apparatus according to an embodiment of this application. The model training apparatus 1300 includes an obtaining module 1301, a generation module 1302, and a training module 1303. The obtaining module 1301 is configured to obtain first size information and N pieces of second size information, where the first size information indicates a size of an unoccupied area in an accommodation space, N is an integer greater than or equal to 1, and the second size information indicates a size of a first object. The generation module 1302 is configured to generate M candidate placement locations based on the first size information and the N pieces of second size information, where one of the M candidate placement locations indicates a placement location of a target object in the unoccupied area, the target object is one object in the N first objects, and M is an integer greater than or equal to 1. The generation module 1302 is further configured to generate, based on the first size information and the M candidate placement locations by using a first machine learning model, M first score values that are in a one-to-one correspondence with the M candidate placement locations. The training module 1303 is configured to train the first machine learning model based on a first loss function until a convergence condition is met, where the first loss function indicates a similarity between a maximum value of the M first score values and a fourth score value, and the fourth score value is a score value of one placement location selected from a plurality of candidate placement locations in a previous training process.

In a possible design, the first size information is a two-dimensional matrix, a quantity of rows of the two-dimensional matrix indicates a first size of a bottom surface of the accommodation space, a quantity of columns of the two-dimensional matrix indicates a second size of the bottom surface of the accommodation space, and if the first size is a length, the second size is a width, or if the first size is a width, the second size is a length; and the bottom surface of the accommodation space is divided into a plurality of first areas, there is no intersection between different first areas, the two-dimensional matrix includes a plurality of matrix values that are in a one-to-one correspondence with the plurality of first areas, and each matrix value indicates a remaining space of one of the plurality of first areas in a height direction.

In a possible design, the first machine learning model includes a first submodel and a second submodel, and the generation module 1302 is specifically configured to: input the first size information and the M candidate placement locations into the first submodel, to obtain M second score values that are output by the first submodel and that are in a one-to-one correspondence with the M candidate placement locations; input N first volume values that are in a one-to-one correspondence with the N first objects into the second submodel, to obtain N third score values that are output by the second submodel and that are in a one-to-one correspondence with the N first objects, where one first object includes at least one second object, and a first volume is any one of the following: an average volume of the at least one second object, a volume of a largest second object in the at least one second object, or a volume of a smallest second object in the at least one second object; and generate the M first score values based on the M second score values, the N third score values, and a first correspondence, where the first correspondence is a correspondence between the M second score values and the N third score values.

It should be noted that content such as information exchange or an execution process between the modules/units in the model training apparatus 1300 is based on a same concept as the method embodiments corresponding to FIG. 3 and FIG. 9 in this application. For specific content, refer to the descriptions in the foregoing method embodiments in this application. Details are not described herein again.

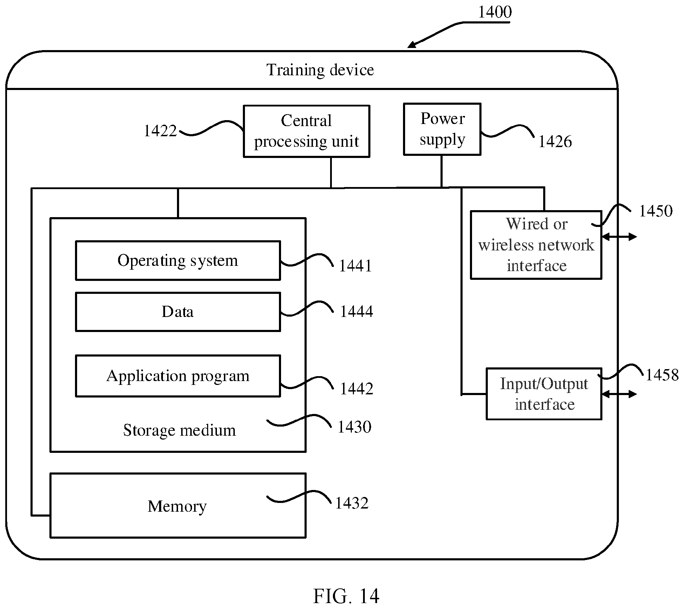

An embodiment of this application further provides a training device. FIG. 14 is a schematic diagram of a structure of a training device according to an embodiment of this application. The model training apparatus 1300 described in the embodiment corresponding to FIG. 13 may be deployed on the training device 1400, and the training device 1400 is configured to implement functions of the training device in the embodiments corresponding to FIG. 3 to FIG. 9. Specifically, a great difference may be generated due to different configurations or performance of the training device 1400, and the training device 1400 may include one or more central processing units (central processing units, CPU) 1422 (for example, one or more processors), a memory 1432, and one or more storage media 1430 storing an application program 1442 or data 1444 (for example, one or more mass storage devices). The memory 1432 and the storage medium 1430 may be transient storage or persistent storage. In an embodiment, the memory 1432 is a random access memory (random access memory, RAM), may directly exchange data with the central processing unit 1422, is configured to load the data 1444 and the application program 1442 and/or an operating system 1441 for the central processing unit 1422 for directly running and use, and is usually used as a temporary data storage medium of the operating system or another running program. A program stored in the storage medium 1430 may include one or more modules (not shown in the figure), and each module may include a series of instruction operations for the training device. Further, the central processing unit 1422 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, and/or one or more operating systems 1441, for example, Windows ServerTM, Mac OS XTM, UnixTM, LinuxTM, and FreeBSDTM.

In a case, in this embodiment of this application, the central processing unit 1422 is configured to perform the model training method performed by the training device in the embodiments corresponding to FIG. 3 to FIG. 9. Specifically, training of the machine learning model includes a plurality of rounds of iterations. In one round of the plurality of rounds of iterations, the central processing unit 1422 is specifically configured to:

obtain first size information and N pieces of second size information, where the first size information indicates a size of an unoccupied area in an accommodation space, N is an integer greater than or equal to 1, and the second size information indicates a size of a first object;

generate M candidate placement locations based on the first size information and the N pieces of second size information, where one of the M candidate placement locations indicates a placement location of a target object in the unoccupied area, the target object is one object in the N first objects, and M is an integer greater than or equal to 1;

generate, based on the first size information and the M candidate placement locations by using a first machine learning model, M first score values that are in a one-to-one correspondence with the M candidate placement locations; and

train the first machine learning model based on a first loss function, where the first loss function indicates a similarity between a maximum value of the M first score values and a fourth score value, and the fourth score value is a score value of one placement location selected from a plurality of candidate placement locations in a previous training process.

It should be noted that the central processing unit 1422 is further configured to perform other steps performed by the training device in FIG. 3 to FIG. 9. For a specific implementation of performing, by the central processing unit 1422, the steps performed by the training device in the embodiments corresponding to FIG. 3 to FIG. 9 and beneficial effects brought by the steps, refer to the descriptions in the method embodiments corresponding to FIG. 3 to FIG. 9. Details are not described herein one by one again.

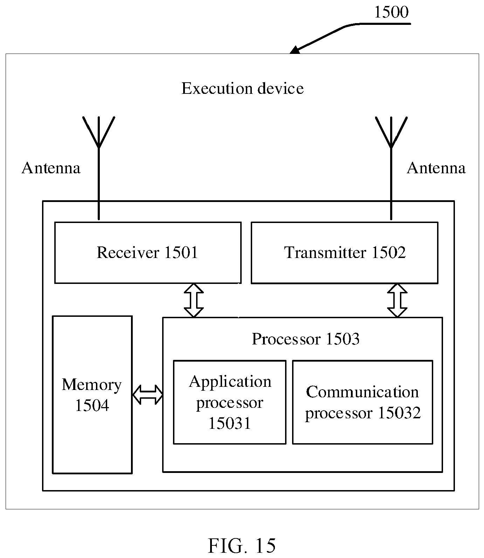

An embodiment of this application further provides an execution device. FIG. 15 is a schematic diagram of a structure of an execution device according to an embodiment of this application. The placement location obtaining apparatus 1200 described in the embodiment corresponding to FIG. 12 may be deployed on the execution device 1500, and the execution device 1500 is configured to implement functions of the execution device in the embodiments corresponding to FIG. 10 and FIG. 11. Specifically, the execution device 1500 includes a receiver 1501, a transmitter 1502, a processor 1503, and a memory 1504 (where there may be one or more processors 1503 in the execution device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data for the processor 1503. A part of the memory 1504 may further include a non-volatile random access memory (non-volatile random access memory, NVRAM). The memory 1504 stores a processor and operation instructions, an executable module or a data structure, a subnet thereof, or an expanded set thereof. The operation instructions may include various operation instructions to implement various operations.

The processor 1503 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1503, or may be implemented by the processor 1503. The processor 1503 may be an integrated circuit chip, and has a signal processing capability. In an implementation process, steps in the foregoing methods may be implemented through a hardware integrated logical circuit in the processor 1503, or by using instructions in a form of software. The processor 1503 may be a general-purpose processor, a digital signal processor (digital signal processing, DSP), a microprocessor, or a microcontroller. The processor 1503 may further include an application-specific integrated circuit (application specific integrated circuit, ASIC), a field programmable gate array (field-programmable gate array, FPGA) or another programmable logic device, a discrete gate or a transistor logic device, or a discrete hardware component. The processor 1503 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1504, and the processor 1503 reads information in the memory 1504 and completes the steps in the foregoing methods in combination with hardware in the processor 1503.

The receiver 1501 may be configured to: receive input digital or character information, and generate a signal input related to setting and function control of the execution device. The transmitter 1502 may be configured to output digital or character information through an interface. The transmitter 1502 may be further configured to send instructions to a disk group through the interface, to modify data in the disk group. The transmitter 1502 may further include a display device such as a display screen.

In one case, in this embodiment of this application, the application processor 15031 is configured to perform the model training method performed by the execution device in the embodiment corresponding to FIG. 10 or FIG. 11. Specifically, the application processor 15031 is specifically configured to:

obtain first size information and N pieces of second size information, where the first size information indicates a size of an unoccupied area in an accommodation space, N is an integer greater than or equal to 1, and the second size information indicates a size of a first object;

generate M candidate placement locations based on the first size information and the N pieces of second size information, where one of the M candidate placement locations indicates a placement location of a target object in the unoccupied area, the target object is one object in the N first objects, and M is an integer greater than or equal to 1;

generate, based on the first size information and the M candidate placement locations by using a first machine learning model, M first score values that are in a one-to-one correspondence with the M candidate placement locations; and

select a first placement location from the M candidate placement locations based on the M first score values.

It should be noted that, the application processor 15031 is further configured to perform other functions performed by the execution device in the embodiments corresponding to FIG. 3 to FIG. 9. For a specific implementation in which the application processor 15031 performs the functions of the execution device in the embodiments corresponding to FIG. 3 to FIG. 9 and beneficial effects brought by the functions, refer to the descriptions in the method embodiments corresponding to FIG. 3 to FIG. 9. Details are not described herein one by one again.

Optionally, in some application scenarios, the execution device 1500 may be a robot configured for carrying, and a mechanical arm is configured in the robot, or the execution device 1500 is a mechanical arm, and the like. This is not limited herein. The execution device 1500 selects one third object from the N first objects according to an indication of the first placement location through the mechanical arm, and places the third object in the unoccupied space.

In some other application scenarios, the execution device 1500 may alternatively output placement indication information through the foregoing interface, where the placement indication information is used to indicate a placement location of the first object in the accommodation space.

An embodiment of this application further provides a computer-readable storage medium. The computer-readable storage medium stores a program. When the program is run on a computer, the computer is enabled to perform the steps performed by the training device in the methods described in the embodiments shown in FIG. 3 to FIG. 9, or the computer is enabled to perform the steps performed by the execution device in the methods described in the embodiments shown in FIG. 10 and FIG. 11.

An embodiment of this application further provides a computer program product. When the computer program product runs on a computer, the computer is enabled to perform the steps performed by the training device in the methods described in the embodiments shown in FIG. 3 to FIG. 9, or the computer is enabled to perform the steps performed by the execution device in the methods described in the embodiments shown in FIG. 10 and FIG. 11.

An embodiment of this application further provides a circuit system. The circuit system includes a processing circuit. The processing circuit is configured to perform the steps performed by the training device in the methods described in the embodiments shown in FIG. 3 to FIG. 9, or the processing circuit is configured to perform the steps performed by the execution device in the methods described in the embodiments shown in FIG. 10 and FIG. 11.

The execution device and the training device that are provided in embodiments of this application may be specifically chips. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the model training method described in the embodiments shown in FIG. 3 to FIG. 9, or the chip performs the placement location obtaining method described in the embodiments shown in FIG. 10 and FIG. 11. Optionally, the storage unit is a storage unit in the chip, for example, a register or a cache; or the storage unit may be a storage unit that is in a radio access device and that is located outside the chip, for example, a read-only memory (read-only memory, ROM), another type of static storage device that can store static information and instructions, or a random access memory (random access memory, RAM).

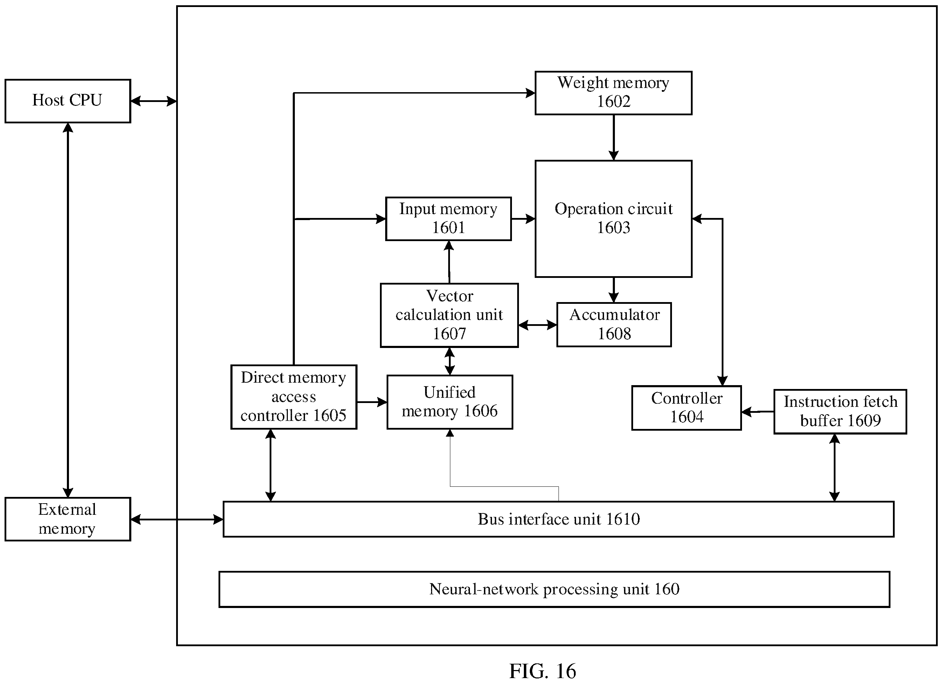

Specifically, FIG. 16 is a schematic diagram of a structure of a chip according to an embodiment of this application. The chip may be represented as a neural network processing unit NPU 160. The NPU 160 is mounted to a host CPU (Host CPU) as a coprocessor, and the host CPU allocates a task. A core part of the NPU is an operation circuit 1603, and a controller 1604 controls the operation circuit 1603 to extract matrix data in a memory and perform a multiplication operation.

In some implementations, the operation circuit 1603 internally includes a plurality of processing units (Process Engine, PE). In some implementations, the operation circuit 1603 is a two-dimensional systolic array. The operation circuit 1603 may alternatively be a one-dimensional systolic array or another electronic circuit capable of performing mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602, and buffers the data on each PE in the operation circuit. The operation circuit fetches data of the matrix A from an input memory 1601 to perform a matrix operation on the matrix B, to obtain a partial result or a final result of the matrix, which is stored in an accumulator (accumulator) 1608.

A unified memory 1606 is configured to store input data and output data. The weight data is directly transferred to the weight memory 1602 through a direct memory access controller (direct memory access controller, DMAC) 1605. The input data is also transferred to the unified memory 1606 through the DMAC.

A bus interface unit (Bus Interface Unit, BIU for short) 1610 is used by an instruction fetch buffer 1609 to obtain instructions from an external memory, and is further used by the direct memory access controller 1605 to obtain original data of the input matrix A or the weight matrix B from the external memory.

The DMAC is mainly configured to transfer input data in the external memory DDR to the unified memory 1606, transfer weight data to the weight memory 1602, or transfer input data to the input memory 1601.

A vector calculation unit 1607 includes a plurality of operation processing units. If required, further processing is performed on an output of the operation circuit, for example, vector multiplication, vector addition, an exponential operation, a logarithmic operation, or size comparison. The vector calculation unit 1607 is mainly configured to perform network calculation at a non-convolutional/fully connected layer in a neural network, for example, batch normalization (batch normalization), pixel-level summation, and upsampling on a feature plane.

In some implementations, the vector calculation unit 1607 can store a processed output vector in the unified memory 1606. For example, the vector calculation unit 1607 may apply a linear function or a non-linear function to the output of the operation circuit 1603, for example, perform linear interpolation on a feature plane extracted at a convolutional layer. For another example, the linear function or the non-linear function is applied to a vector of an accumulated value to generate an activation value. In some implementations, the vector calculation unit 1607 generates a normalized value, a pixel-level summation value, or both. In some implementations, the processed output vector can be used as an activation input to the operation circuit 1603, for example, to be used in a subsequent layer in the neural network.

The instruction fetch buffer (instruction fetch buffer) 1609 connected to the controller 1604 is configured to store instructions used by the controller 1604. The unified memory 1606, the input memory 1601, the weight memory 1602, and the instruction fetch buffer 1609 are all on-chip memories. The external memory is private for a hardware architecture of the NPU.

An operation at each layer in a recurrent neural network may be performed by the operation circuit 1603 or the vector calculation unit 1607.

The processor mentioned anywhere above may be a general-purpose central processing unit, a microprocessor, an ASIC, or one or more integrated circuits that are configured to control program execution of the method according to the first aspect.

In addition, it should be noted that the apparatus embodiments described above are merely an example. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of the embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or certainly may be implemented by dedicated hardware, including a dedicated integrated circuit, a dedicated CLU, a dedicated memory, a dedicated component, and the like. Generally, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application. In addition, the computer software product may alternatively be implemented in a form of a control, a driver, an independent or downloadable software object, or the like.

All or some of the foregoing embodiments may be implemented by software, hardware, firmware, or any combination thereof. When the software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A placement location obtaining method, wherein the method comprises:

   obtaining first size information and N pieces of second size information, wherein the first size information indicates a size of an unoccupied area in accommodation space, N is an integer greater than or equal to 1, and the second size information indicates a size of a first object;
   generating M candidate placement locations based on the first size information and the N pieces of second size information, wherein one of the M candidate placement locations indicates a placement location of a target object in the unoccupied area, the target object is one object in the N first objects, and M is an integer greater than or equal to 1;

generating, based on the first size information and the M candidate placement locations by using a first machine learning model, M first score values that are in a one-to-one correspondence with the M candidate placement locations; and

selecting a first placement location from the M candidate placement locations based on the M first score values.

2. The method according to claim 1, wherein the first size information is a two-dimensional matrix;

a quantity of rows of the two-dimensional matrix indicates a first size of a bottom surface of the accommodation space, a quantity of columns of the two-dimensional matrix indicates a second size of the bottom surface of the accommodation space, and if the first size is a length, the second size is a width, or if the first size is a width, the second size is a length; and

the bottom surface of the accommodation space is divided into a plurality of first areas, there is no intersection between different first areas, the two-dimensional matrix comprises a plurality of matrix values that are in a one-to-one correspondence with the plurality of first areas, and each matrix value indicates remaining space of one of the plurality of first areas in a height direction.

3. The method according to claim 1 or 2, wherein the first machine learning model comprises a first submodel and a second submodel, and the generating, based on the first size information and the M candidate placement locations by using a first machine learning model, M first score values that are in a one-to-one correspondence with the M candidate placement locations comprises:

inputting the first size information and the M candidate placement locations into the first submodel, to obtain M second score values that are output by the first submodel and that are in a one-to-one correspondence with the M candidate placement locations;

inputting N first volume values that are in a one-to-one correspondence with the N first objects into the second submodel, to obtain N third score values that are output by the second submodel and that are in a one-to-one correspondence with the N first obj ects, wherein one first object comprises at least one second object, and a first volume is any one of the following: an average volume of the at least one second object, a volume of a largest second object in the at least one second object, or a volume of a smallest second object in the at least one second object; and

generating the M first score values based on the M second score values, the N third score values, and a first correspondence, wherein the first correspondence is a correspondence between the M second score values and the N third score values.

4. The method according to claim 3, wherein the generating the M first score values based on the M second score values, the N third score values, and a first correspondence comprises:

obtaining, from the N third score values based on the first correspondence, at least one third score value corresponding to a target score value, wherein the target score value is any score value in the M second score values; and

adding each third score value in the at least one third score value corresponding to the target score value to the target score value, to obtain the first score value.

5. The method according to claim 3, wherein the inputting the first size information and the M candidate placement locations into the first submodel, to obtain M second score values that are output by the first submodel and that are in a one-to-one correspondence with the M candidate placement locations comprises:
performing feature extraction on the first size information by using the first submodel, to obtain first feature information, and connecting the first feature information to each of the M candidate placement locations by using the first submodel, to generate the M second score values.

6. The method according to claim 3, wherein the first submodel is any one of the following neural networks: a deep Q network, a double deep Q network, a dueling double deep Q network, or a nature deep Q network, and the second submodel is a fully connected neural network.

7. A model training method, wherein the method comprises:

obtaining first size information and N pieces of second size information, wherein the first size information indicates a size of an unoccupied area in accommodation space, N is an integer greater than or equal to 1, and the second size information indicates a size of a first object;

generating M candidate placement locations based on the first size information and the N pieces of second size information, wherein one of the M candidate placement locations indicates a placement location of a target object in the unoccupied area, the target object is one object in the N first objects, and M is an integer greater than or equal to 1;

generating, based on the first size information and the M candidate placement locations by using a first machine learning model, M first score values that are in a one-to-one correspondence with the M candidate placement locations; and

training the first machine learning model based on a first loss function until a convergence condition is met, wherein the first loss function indicates a similarity between a maximum value of the M first score values and a fourth score value, and the fourth score value is a score value of one placement location selected from a plurality of candidate placement locations in a previous training process.

8. The method according to claim 7, wherein the first size information is a two-dimensional matrix;

a quantity of rows of the two-dimensional matrix indicates a first size of a bottom surface of the accommodation space, a quantity of columns of the two-dimensional matrix indicates a second size of the bottom surface of the accommodation space, and if the first size is a length, the second size is a width, or if the first size is a width, the second size is a length; and

the bottom surface of the accommodation space is divided into a plurality of first areas, there is no intersection between different first areas, the two-dimensional matrix comprises a plurality of matrix values that are in a one-to-one correspondence with the plurality of first areas, and each matrix value indicates remaining space of one of the plurality of first areas in a height direction.

9. The method according to claim 7 or 8, wherein the first machine learning model comprises a first submodel and a second submodel, and the generating, based on the first size information and the M candidate placement locations by using a first machine learning model, M first score values that are in a one-to-one correspondence with the M candidate placement locations comprises:

inputting the first size information and the M candidate placement locations into the first submodel, to obtain M second score values that are output by the first submodel and that are in a one-to-one correspondence with the M candidate placement locations;

inputting N first volume values that are in a one-to-one correspondence with the N first objects into the second submodel, to obtain N third score values that are output by the second submodel and that are in a one-to-one correspondence with the N first objects, wherein one first object comprises at least one second object, and a first volume is any one of the following: an average volume of the at least one second object, a volume of a largest second object in the at least one second object, or a volume of a smallest second object in the at least one second object; and

generating the M first score values based on the M second score values, the N third score values, and a first correspondence, wherein the first correspondence is a correspondence between the M second score values and the N third score values.

10. A placement location obtaining apparatus, wherein the apparatus comprises:

an obtaining module, configured to obtain first size information and N pieces of second size information, wherein the first size information indicates a size of an unoccupied area in accommodation space, N is an integer greater than or equal to 1, and the second size information indicates a size of a first object;

a generation module, configured to generate M candidate placement locations based on the first size information and the N pieces of second size information, wherein one of the M candidate placement locations indicates a placement location of a target object in the unoccupied area, the target object is one object in the N first objects, and M is an integer greater than or equal to 1, wherein

the generation module is further configured to generate, based on the first size information and the M candidate placement locations by using a first machine learning model, M first score values that are in a one-to-one correspondence with the M candidate placement locations; and

a selection module, configured to select a first placement location from the M candidate placement locations based on the M first score values.

11. The apparatus according to claim 10, wherein the first size information is a two-dimensional matrix;

a quantity of rows of the two-dimensional matrix indicates a first size of a bottom surface of the accommodation space, a quantity of columns of the two-dimensional matrix indicates a second size of the bottom surface of the accommodation space, and if the first size is a length, the second size is a width, or if the first size is a width, the second size is a length; and

the bottom surface of the accommodation space is divided into a plurality of first areas, there is no intersection between different first areas, the two-dimensional matrix comprises a plurality of matrix values that are in a one-to-one correspondence with the plurality of first areas, and each matrix value indicates remaining space of one of the plurality of first areas in a height direction.

12. The apparatus according to claim 10 or 11, wherein the first machine learning model comprises a first submodel and a second submodel, and the generation module is specifically configured to:

input the first size information and the M candidate placement locations into the first submodel, to obtain M second score values that are output by the first submodel and that are in a one-to-one correspondence with the M candidate placement locations;

input N first volume values that are in a one-to-one correspondence with the N first objects into the second submodel, to obtain N third score values that are output by the second submodel and that are in a one-to-one correspondence with the N first objects, wherein one first object comprises at least one second object, and a first volume is any one of the following: an average volume of the at least one second object, a volume of a largest second object in the at least one second object, or a volume of a smallest second object in the at least one second object; and

generate the M first score values based on the M second score values, the N third score values, and a first correspondence, wherein the first correspondence is a correspondence between the M second score values and the N third score values.

13. The apparatus according to claim 12, wherein the generation module is specifically configured to:

obtain, from the N third score values based on the first correspondence, at least one third score value corresponding to a target score value, wherein the target score value is any score value in the M second score values; and

add each third score value in the at least one third score value corresponding to the target score value to the target score value, to obtain the first score value.

14. The apparatus according to claim 12, wherein the generation module is specifically configured to: perform feature extraction on the first size information by using the first submodel, to obtain first feature information, and connect the first feature information to each of the M candidate placement locations by using the first submodel, to generate the M second score values.

15. The apparatus according to claim 12, wherein the first submodel is any one of the following neural networks: a deep Q network, a double deep Q network, a dueling double deep Q network, or a nature deep Q network, and the second submodel is a fully connected neural network.

16. A model training apparatus, wherein the apparatus comprises:

an obtaining module, configured to obtain first size information and N pieces of second size information, wherein the first size information indicates a size of an unoccupied area in accommodation space, N is an integer greater than or equal to 1, and the second size information indicates a size of a first object;

a generation module, configured to generate M candidate placement locations based on the first size information and the N pieces of second size information, wherein one of the M candidate placement locations indicates a placement location of a target object in the unoccupied area, the target object is one object in the N first objects, and M is an integer greater than or equal to 1, wherein

the generation module is further configured to generate, based on the first size information and the M candidate placement locations by using a first machine learning model, M first score values that are in a one-to-one correspondence with the M candidate placement locations; and

a training module, configured to train the first machine learning model based on a first loss function until a convergence condition is met, wherein the first loss function indicates a similarity between a maximum value of the M first score values and a fourth score value, and the fourth score value is a score value of one placement location selected from a plurality of candidate placement locations in a previous training process.

17. The apparatus according to claim 16, wherein the first size information is a two-dimensional matrix;

a quantity of rows of the two-dimensional matrix indicates a first size of a bottom surface of the accommodation space, a quantity of columns of the two-dimensional matrix indicates a second size of the bottom surface of the accommodation space, and if the first size is a length, the second size is a width, or if the first size is a width, the second size is a length; and
the bottom surface of the accommodation space is divided into a plurality of first areas, there is no intersection between different first areas, the two-dimensional matrix comprises a plurality of matrix values that are in a one-to-one correspondence with the plurality of first areas, and each matrix value indicates remaining space of one of the plurality of first areas in a height direction.

18. The apparatus according to claim 16 or 17, wherein the first machine learning model comprises a first submodel and a second submodel, and the generation module is specifically configured to:

input the first size information and the M candidate placement locations into the first submodel, to obtain M second score values that are output by the first submodel and that are in a one-to-one correspondence with the M candidate placement locations;
input N first volume values that are in a one-to-one correspondence with the N first objects into the second submodel, to obtain N third score values that are output by the second submodel and that are in a one-to-one correspondence with the N first objects, wherein one first object comprises at least one second object, and a first volume is any one of the following: an average volume of the at least one second object, a volume of a largest second object in the at least one second object, or a volume of a smallest second object in the at least one second object; and
generate the M first score values based on the M second score values, the N third score values, and a first correspondence, wherein the first correspondence is a correspondence between the M second score values and the N third score values.

19. An execution device, comprising a processor, wherein the processor is coupled to a memory, and the memory stores program instructions; and when the program instructions stored in the memory are executed by the processor, the method according to any one of claims 1 to 6 is implemented.

20. The execution device according to claim 19, further comprising:

a mechanical arm, wherein
the mechanical arm is configured to: select one third object from the N first objects according to an indication of the first placement location, and place the third object in the unoccupied space.

21. The execution device according to claim 19, further comprising:

an output interface, wherein
the output interface is configured to output placement indication information based on the first placement location, wherein the placement indication information indicates a placement location of the first object in the accommodation space.

22. A training device, comprising a processor, wherein the processor is coupled to a memory, and the memory stores program instructions; and when the program instructions stored in the memory are executed by the processor, the method according to any one of claims 7 to 9 is implemented.

23. A computer-readable storage medium, comprising a program, wherein when the program is run on a computer, the computer is enabled to perform the method according to any one of claims 1 to 6, or the computer is enabled to perform the method according to any one of claims 7 to 9.

24. A circuit system, wherein the circuit system comprises a processing circuit, and the processing circuit is configured to perform the method according to any one of claims 1 to 6, or the processing circuit is configured to perform the method according to any one of claims 7 to 9.

25. A computer program product, wherein the computer program product comprises instructions; and when the instructions are loaded and executed by an electronic device, the electronic device is enabled to perform the method according to any one of claims 1 to 6, or the electronic device is enabled to perform the method according to any one of claims 7 to 9.

Intelligent information chain

Intelligent product and industry application

| Translation/Text analysis/... | Voice/Vision/ Image/... |

| Data | Data processing: | Data training/ Machine learning/ Deep learning | Searching/ Inference/ Decision-making | ... |

| Infrastructure | Sensor | Intelligent chip | Basic platform | ... |

IT value chain

FIG. 1

FIG. 2

A training device obtains a first training task from a training data set ⟋ 301

The training device obtains first size information and N pieces of second size information based on the first training task, where the first size information indicates a size of an unoccupied area in an accommodation space, and the second size information indicates a size of a first object ⟋ 302

The training device generates M candidate placement locations based on the first size information and the N pieces of second size information ⟋ 303

The training device generates, based on the first size information and the M candidate placement locations by using a first machine learning model, M first score values that are in a one-to-one correspondence with the M candidate placement locations ⟋ 304

The training device selects a first placement location from the M candidate placement locations based on the M first score values ⟋ 305

The training device trains the first machine learning model based on a first loss function until a convergence condition is met ⟋ 306

FIG. 3

(a)

(b)

FIG. 4

(a)

(b)

FIG. 5

(a)

(b)

FIG. 6

(a)

(b)

A1

FIG. 7

FIG. 8

```
┌─────────────────────────┐
│  C1: Input first size   │
│      information        │
└─────────────────────────┘
            │
            ▼
┌ ─ ─ ─ ─ ─ ─ ─ ─ ─ ─ ─ ─ C2    ┌──────────────────────────┐
│                         │      │  C3: Generate M candidate │
│  ┌─────────────────┐    │      │ placement locations based on│
│  │ Feature extraction│   │      │  the first size information and│
│  │    network       │    │      │ second size information of each│
│  └─────────────────┘    │      │       first object        │
│                         │      └──────────────────────────┘
└ ─ ─ ─ ─ ─ ─ ─ ─ ─ ─ ─ ─ ┘                  │
            │                                 ▼
            ▼
┌────────────────────┐         ┌──────────────────────┐
│ C4: Input first feature│      │  C4: Input the M candidate│
│     information    │         │    placement locations │
└────────────────────┘         └──────────────────────┘
```

Fully connected neural network

Connect

Generate M second score values

C5

C6: Input N first volumes corresponding to N first objects

Fully connected neural network

Generate N third score values that are in a one-to-one correspondence with the N first objects

C7: Generate M first score values

FIG. 9

An execution device obtains a first task — 1001

The execution device obtains first size information and N pieces of second size information, where the first size information indicates a size of an unoccupied area in an accommodation space, and the second size information indicates a size of a first object — 1002

The execution device generates M candidate placement locations based on the first size information and the N pieces of second size information — 1003

The execution device generates, based on the first size information and the M candidate placement locations by using a first machine learning model, M first score values that are in a one-to-one correspondence with the M candidate placement locations — 1004

The execution device selects a first placement location from the M candidate placement locations based on the M first score values — 1005

FIG. 10

FIG. 11

1200

| Placement location obtaining apparatus | | |
|---|---|---|
| Obtaining module 1201 | Generation module 1202 | Selection module 1203 |

FIG. 12

1300

| Model training apparatus | | |
|---|---|---|
| Obtaining module 1301 | Generation module 1302 | Training module 1303 |

FIG. 13

1400

## Training device

1422 — Central processing unit

Power supply — 1426

Wired or wireless network interface — 1450

Operating system — 1441

Data — 1444

Application program — 1442

Storage medium — 1430

Input/Output interface — 1458

Memory — 1432

FIG. 14

1500

Execution device

Antenna

Antenna

Receiver 1501

Transmitter 1502

Processor 1503

Memory 1504

Application processor 15031

Communication processor 15032

FIG. 15

FIG. 16

## INTERNATIONAL SEARCH REPORT

International application No.

**PCT/CN2021/126581**

### A. CLASSIFICATION OF SUBJECT MATTER

G06K 9/62(2006.01)i

According to International Patent Classification (IPC) or to both national classification and IPC

### B. FIELDS SEARCHED

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNTXT, WPABSC, CNABS, DWPI, ENTXTC, VEN, CNKI: 容器, 训练, 仓库, 位置, 评分, 摆放, 神经网络, 尺寸, 物流, 候选, 货物, 快递, container, train, warehouse, position, score, put, neural network, size, logistics, candidate, good, express

### C. DOCUMENTS CONSIDERED TO BE RELEVANT

| Category* | Citation of document, with indication, where appropriate, of the relevant passages | Relevant to claim No. |
|---|---|---|
| PX | CN 112733910 A (HUAWEI TECHNOLOGIES CO., LTD.) 30 April 2021 (2021-04-30) claims 1-25, description paragraphs 50-219 | 1-25 |
| Y | JP 2020119089 A (TOSHIBA CORP., et al.) 06 August 2020 (2020-08-06) description, pages 4-12 | 1-25 |
| Y | CN 111915060 A (HUAWEI TECHNOLOGIES CO., LTD.) 10 November 2020 (2020-11-10) description paragraphs 125-161, 170-192 | 1-25 |
| Y | CN 111652558 A (LENOVO (BEIJING) LIMITED) 11 September 2020 (2020-09-11) description, paragraphs 53-170 | 1-25 |
| A | CN 110443549 A (TSINGHUA UNIVERSITY) 12 November 2019 (2019-11-12) entire document | 1-25 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 December 2021** | **20 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| | International application No. |
|---|---|
| | **PCT/CN2021/126581** |

| Patent document cited in search report | | | Publication date (day/month/year) | Patent family member(s) | Publication date (day/month/year) |
|---|---|---|---|---|---|
| CN | 112733910 | A | 30 April 2021 | None | |
| JP | 2020119089 | A | 06 August 2020 | None | |
| CN | 111915060 | A | 10 November 2020 | None | |
| CN | 111652558 | A | 11 September 2020 | None | |
| CN | 110443549 | A | 12 November 2019 | None | |

Form PCT/ISA/210 (patent family annex) (January 2015)

**REFERENCES CITED IN THE DESCRIPTION**

**Patent documents cited in the description**

- CN 202011631359